(19) Europäisches Patentamt
European Patent Office
Office européen des brevets

(11) Veröffentlichungsnummer: **0 208 908**
**B1**

(12) # EUROPÄISCHE PATENTSCHRIFT

(45) Veröffentlichungstag der Patentschrift: **18.01.89**

(51) Int. Cl.⁴: **C 09 D 3/72**, C 08 G 18/06, D 06 M 15/564, D 06 N 3/14

(21) Anmeldenummer: **86107842.6**

(22) Anmeldetag: **09.06.86**

(54) **Ionisch modifizierte PUR-Streichpasten und ihre Verwendung.**

(30) Priorität: **19.06.85 DE 3521762**

(43) Veröffentlichungstag der Anmeldung: **21.01.87 Patentblatt 87/4**

(45) Bekanntmachung des Hinweises auf die Patenterteilung: **18.01.89 Patentblatt 89/3**

(84) Benannte Vertragsstaaten: **AT BE CH DE FR GB IT LI NL SE**

(56) Entgegenhaltungen:
**DE-A-3 134 161**
**DE-A-3 210 051**
**DE-A-3 231 062**

(73) Patentinhaber: **BAYER AG, Konzernverwaltung RP Patentabteilung, D-5090 Leverkusen 1 Bayerwerk (DE)**

(72) Erfinder: **Nachtkamp, Klaus, Dr., c/o Mobay Corporation, New Martinsville W. Va. 26155 (US)**
Erfinder: **Thoma, Wilhelm, Dr., Birkenweg 25, D-5090 Leverkusen 3 (DE)**
Erfinder: **Pedain, Josef, Dr., Haferkamp 6, D-5000 Köln 80 (DE)**
Erfinder: **Schröer, Walter, Dr., Nicolai-Hartmann-Strasse 29, D-5090 Leverkusen (DE)**
Erfinder: **Langel, Rolf, Hüscheider Strasse 85, D-5090 Leverkusen 3 (DE)**
Erfinder: **Noll, Klaus, Dr., Morgengraben 6, D-5000 Köln 80 (DE)**

**EP 0 208 908 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue, ionisch modifizierte PUR-Streichpasten, ihre Herstellung und ihre Verwendung zur Herstellung von wasserdampfdurchlässigen Beschichtungen auf Textil- oder Ledersubstraten im Direkt- oder Transferverfahren nach dem Prinzip der Verdampfungskoagulation unter Verwendung von Polyurethan-Kunststoffe enthaltenden Streichpasten.

Textil- oder Lederbeschichtungen, die eine hohe Durchlässigkeit für Wasserdampf aufweisen, sind, vor allem auf dem Bekleidungs- und Schuhsektor, von zunehmendem Ineresse. Der Vorteil solchermassen beschichteter Materialien ist, dass die daraus hergestellte Bekleidung einerseits optimal schützt, andererseits aber die Körperfeuchtigkeit in Form von Wasserdampf entweichen lässt. Diese Eigenschaften haben sowohl in gesundheitlicher und hygienischer Hinsicht als auch im Hinblick auf den Tragekomfort einen hohen Stellenwert.

Ein wichtiges Verfahren, mikroporöse und somit wasserdampfdurchlässige Beschichtungen zu erzeugen, ist das der sogenannten Badkoagulation, wie es zum Beispiel in DE-AS 1 270 276 und DE-AS 1 769 277 beschrieben ist. Dabei wird ein Substrat mit einem in einem organischen Lösungsmittel gelösten Polyurethan oder Polyurethanharnstoff beschichtet und das beschichtete Produkt in ein Bad aus einem mit dem Lösungsmittel mischbaren Nichtlösungsmittel (zum Beispiel Wasser) geführt. Die Koagulation des Polyurethans erfolgt durch die Extraktion des Lösungsmittels durch den Nichtlöser.

Die Nachteile dieses Verfahrens bestehen darin, dass zur erforderlichen vollständigen Entfernung des Lösungsmittels sehr grosse Mengen Nichtlöser benötigt werden, und dass die Fahrgeschwindigkeit niedrig ist. Ausserdem sind zur Durchführung dieses Verfahrens wie auch zur Aufarbeitung der dabei anfallenden Lösungsmittel-/Nichtlösungsmittelgemische spezielle, relativ aufwendige Apparaturen erforderlich.

Es hat daher nicht an Versuchen gefehlt, wasserdampfdurchlässige Beschichtungen nach Art einer einfach Direkt- oder Transferbeschichtung auf konventionellen Textilbeschichtungsmaschinen herzustellen. Die meisten dieser Versuche beschreiten den Weg der sogenannten Verdampfungskogulation. Dieses Verfahren wird im Prinzip so durchgeführt, dass einem in einem flüchtigen Lösungsmittel gelösten Polymeren eine gewisse Menge eines weniger flüchtigen Nichtlösungsmittels beigemischt wird und die so entstandende Lösung, Dispersion oder Suspension auf ein Substrat gestrichen wird. Die Beschichtung wird durch schonenderes Erhitzen getrocknet, wobei zunächst bevorzugt das flüchtige Lösungsmittel verdampft. Die Folge ist, dass das Polymere in der Schicht koaguliert und nach endgültiger Trocknung eine mikroporöse Struktur aufweist. Diese Verfahrensweise ist zum Beispiel in DE-PS 1 694 059 beschrieben: dabei werden Polyurethane eingesetzt, die in flüchtigen organischen Lösungsmitteln, wie zum Beispiel Tetrahydrofuran oder Methylethylketon kolloidal gelöst sind und mit organischen Nichtlösungsmitteln höherer Verdunstungszahl, wie zum Beispiel Waschbenzin, vermischt werden. Eine ähnliche Verfahrensweise ist in der CH-PS 481 971 beschrieben, mit der Erweiterung, dass dort unter den den Polymerlösungen zuzusetzenden Nichtlösungsmitteln auch Wasser genannt wird. Ein weiteres Beispiel dieser Art stellt das Verfahren gemäss DE-PS 2 004 276 dar. Hier werden hydrophile Polyurethane eingesetzt, die bestimmte Anteile an Polyoxyethylenverbindungen als Aufbaukomponenten enthalten. Lösungen dieser Polyurethane in bestimmten organischen Lösungsmitteln, wie zum Beispiel Methylethylketon, werden mit Wasser als Nichtlösungsmittel vermischt und auf ein Substrat aufgetragen, worauf die Beschichtung durch selektive Verdampfung koaguliert und anschliessend getrocknet wird.

Die genannten, nach dem Prinzip der Verdampfungskoagulation arbeitenden Verfahren weisen jedoch noch schwerwiegende Mängel auf. Ein wesentlicher Nachteil besteht darin, dass die selektive Verdampfung der flüchtigeren Lösungsmittelanteile viel Zeit benötigt und einer äusserst genauen Temperaturführungen bedarf.

Die Handhabung der entsprechenden Produkte auf den Beschichtungsmaschinen ist daher kompliziert und vor allem nur mit langsamen Fahrgeschwindigkeiten möglich. Ein weiterer gravierender Nachteil, der insbesondere das erwähnte Verfahren gemäss DE-PS 2 004 276 betrifft, ist in der schwierigen Verarbeitbarkeit der dort beschriebenen Polyurethan-Lösungen bzw. -Suspension begründet. Obwohl der Festkörpergehalt niedrig ist, sind diese Produkte, sogar schon vor der erst zum Zeitpunkt der Applikation stattfindenden Wasserzugabe, hochviskos. Sie werden als «schlammartige Suspension» beschrieben, neigen stark zu vorzeitiger Antrocknung mit Bildung von Gelteilchen und Stippen und sind daher vom Beschichter schlecht zu handhaben.

Aufgabe der vorliegenden Erfindung ist es daher, ein Verfahren zur Herstellung von wasserdampfdurchlässigen Beschichtungen zu beschreiben, das auf herkömmlichen Beschichtungsmaschinen im Direkt- oder Transferverfahren durchgeführt werden kann und das die oben im einzelnen geschilderten Nachteile nicht aufweist.

Diese Aufgabe konnte durch das nachstehend näher beschriebene erfindungsgemässe Verfahren gelöst werden. Der Erfindung liegt die überraschende Beobachtung zugrunde, dass aus an sich hydrophoben, in organischen Lösungsmitteln gelösten Polyurethanen oder Polyurethanharnstoffen, die bestimmte, unten näher definierte Silicon-, Polyether-, Polyester- oder Perfluorcarbonharz-Segmente eingebaut enthalten und die darüber hinaus in Salze überführbare Gruppen eingebaut enthalten, durch Zusatz von bestimmten Mengen an Wasser mehrphasige, stabile Streichpasten mit verfahrensüblichen Viskositäten erhältlich sind, die sich in besonders einfacher Weise auf herkömmliche Beschichtungsmaschinen zu mikroporösen Beschichtungen verarbeiten lassen. Das erfindungsgemässe Verfahren hat den Vorteil, dass die Polyurethanlösungen vor Wasserzusatz niedrigviskos sind und insofern vom Beschichter, der erst kurz vor Anwendung die gebrauchsfertigen Streichpasten herstellt, leicht und

sicher zu handhaben ist. Darüber hinaus zeichnen sich die nach dem erfindungsgemässen Verfahren durch den Gehalt an eingebauten salzbildenden Gruppen gekennzeichneten Streichpasten durch besonders gute Lagerstabilität und Verarbeitungssicherheit aus. Die nach dem erfindungsgemässen Verfahren erhaltenen mikroporösen Beschichtungen weisen schliesslich die gewünschte hohe Wasserdampfdurchlässigkeit bei gleichzeitig guter Wasserdichtigkeit auf.

Gegenstand der vorliegenden Erfindung ist daher die Verwendung von Polyurethan-Kunststoffe enthaltenden, gegebenenfalls pigmentierten Streichpasten zur Herstellung von wasserdampfdurchlässigen Beschichtungen auf Textil- oder Ledersubstraten im Direkt- oder Transferverfahren nach dem Prinzip der Verdampfungskoagulation, dadurch gekennzeichnet, dass die Streichpasten mehrphasige Gemische sind aus

A) 5-50 Gew.-% an sich hydrophoben Polyurethanen und/oder Polyurethanharnstoffen, die 0,01-0,5 Gew.-%, vorzugsweise 0,05-0,25 Gew.-% in Salze überführbare Gruppen, welche teilweise oder ganz, vorzugsweise 0,01-0,4 Gew.-% in Salze überführt sind, und 1-30 Gew.-% Siliconharze mit gegenüber NCO reaktiven Endgruppen und/oder aromatische Hydroxy-Polyether und/oder aromatische Hydroxy-Polyester und/oder Perfluorcarbonharze mit gegenüber NCO reaktiven Endgruppen als weitere Aufbaukomponenten eingebaut enthalten,

B) 0-30 Gew.-% an sich hydrophoben Polyurethan und/oder Polyurethanharnstoffen, die 0,01-0,5 Gew.-% in Salze überführbbare Gruppen eingebaut enthalten und ohne die unter A) genannten speziellen Aufbaukomponenten hergestellt sind,

C) 5-50 Gew.-% organischen Lösungsmitteln für A) und B),

D) 0-40 Gew.-% organischen Nichtlösungsmitteln für A) und B),

E) 0-5 Gew.-% Vernetzungsmitteln, Hydrophobierungsmitteln und/oder weiteren Beschichtungsmitteln,

F) 10-70% Wasser,

wobei die Summe der Komponenten A) bis F) 100 Gew.-% beträgt.

Die zur Durchführung des erfindungsgemässen Verfahrens eingesetzten Streichpasten werden vorzugsweise so hergestellt, dass Lösungen der Polyurethane bzw. Polyurethanharnstoffe A) und gegebenenfalls B) in den organischen Lösungsmitteln C) gegebenenfalls unter Zusatz der organischen Nichtlösungsmittel D) und der Beschichtungshilfsmittel E), gegebenenfalls nach Überführung der in A) und/oder B) zur Salzbildung befähigten Carbonsäure- und/oder Sulfonsäuregruppen oder der tertiären Aminogruppen in Salzform, mit Wasser F) vermischt werden.

Weiterer Erfindungsgegenstand sind die mehrphasigen Streichpastengemische nach Menge und Art der vorstehend aufgeführten Zusammensetzung aus den Komponenten A) bis F).

Die Polyurethane bzw. Polyurethanharnstoffe A) sind in an sich bekannter Weise erhältliche Polyadditionsprodukte aus Polyisoyanaten und Verbindungen mit aktiven Wasserstoffatomen. Wesentliches Kennzeichen dieser Polymeren ist der Gehalt von 0,01-0,5 Gew.-%, bevorzugt 0,05-0,2 Gew.-% an in Salze überführbaren Gruppen, wie Carbonsäure- und/oder Sulfonsäure-Gruppen oder tertiären Aminogruppen und der Gehalt an bestimmten Aufbaukomponenten aus der Gruppe der Siliconharze, der aromatischen Hydroxypolyether, der aromatischen Hydroxypolyester und/oder der Perfluorcarbonharze.

Ausgangsmaterialien zur Herstellung der Polyurethane bzw. Polyurethanharnstoffe A) sind:

1. Beliebige organische Polyisocyanate, vorzugsweise Diisocyanate der Formel $Q(NCO)_2$, wobei Q für einen aliphatischen Kohlenwasserstoffrest mit 4 bis 12 Kohlenstoffatomen, einen cycloaliphatischen Kohlenwasserstoffrest mit 6 bis 25 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen steht.

Beispiele derartiger bevorzugt einzusetzender Diisocyanate sind Tetramethylendiisocyanat, Hexamethylendiisocyanat, Dodecamethylendiisocyanat, 1,4-Diisocyanatocyclohexan, 3-Isocyanatomethyl-3,5,5-trimethylcyclohexylisocyanat (Isophorondiisocyanat), 4,4'-Diisocyanatodicylohexylmethan, 4,4'-Diisocyanato-3-3'-dimethyl-dicyclohexylmethan, 4,4'-Diisocyanatodicyclohexylpropan-(2,2), 1,4-Diisocyanatobenzol, 2,4- oder 2,6-Diisocyanatotoluol bzw. Gemische dieser Isomeren, 4,4'-, 2,4'- oder 2,2'-Diisocyanatodiphenylmethan bzw. Gemische der Isomeren, 4,4'-Diisocyanatodiphenylpropan-(2,2), p-Xylylendiisocyanat und α, α, α', α'-Tetramethyl-m- oder -p-xylylendiisocyanat sowie aus diesen Verbindungen bestehende Gemische.

Besonders bevorzugt (mindestens zu 50 Mol-% aller Diisocyanate) eingesetzte Diisocyanate sind das Isophorondiisocyanat und das 4,4'-Diisocyanato-dicyclohexylmethan.

Es ist selbstverständlich auch möglich, beim erfindungsgemässen Verfahren die in der Polyurethan-Chemie an sich bekannten höherfuntionellen Polyisocyanate oder auch an sich bekannte modifizierte, beispielsweise Carbodiimidgruppen, Allophanatgruppen, Isocyanuratgruppen, Urethangruppen und/oder Biuretgruppn aufweisende Polyisocyanate (mit)zuverwenden.

2. Wasserunlösliche Polyhydroxylverbindungen der in der Polyurethan-Chemie an sich bekannten Art mit Molekulargewichten von 400 bis 10 000, vorzugsweise von 600-5000, Schmelzpunkten unterhalb 60°C, vorzugsweise unterhalb 45°C. Bevorzugt werden die entsprechenden Dihydroxyverbindungen eingesetzt. Die Mitverwendung von im Sinne der Isocyanat- Polyadditionsreaktion tri- oder höherfunktionellen Verbindungen in geringen Anteilen zur Erzielung eines gewissen Verzweigungsgrades ist ebenso möglich wie die bereits erwähnte mögliche Mitverwendung von tri- oder höherfunktionellen Polyisocyanaten zum gleichen Zweck. Weiterhin ist es bevorzugt, dass die entsprechenden Polyhydroxylverbindungen überwiegend aus aliphatischen Aufbaukomponenten hergestellt sind.

Vorzugsweise einzusetzende Hydroxylverbindungen sind die in der Polyurethan-Chemie an sich bekannten Hydroxypolyester, Hydroxypolyether, Hydroxypolythioether, Hydroxypolycarbonate und/oder Hydroxypolyesteramide.

Die in Frage kommenden Hydroxylverbindungen aufweisenden Polyester sind zum Beispiel Umsetzungsprodukte von mehrwertigen, vorzugsweise zweiwertigen und gegebenenfalls zusätzlich dreiwertigen Alkoholen mit mehrwertigen, vorzugsweise zweiwertigen Carbonsäuren. Anstelle der freien Polycarbonsäuren können auch die entsprechenden Polycarbonsäurenanhydride oder entsprechende Polycarbonsäureester von niederen Alkoholen oder deren Gemische zur Herstellung der Polyester verwendet werden.

Die Polycarbonsäuren sind vorzugsweise aliphatischer und/oder cycloaliphatischer Natur und können gegebenenfalls, zum Beispiel durch Halogenatome, substituiert und/oder ungesättigt sein. Als Beispiele hierfür seien genannt: Bernsteinsäure, Adipinsäure, Korksäure, Azelainsäure, Sebacinsäure, Tetrahydrophthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren. Als mehrwertige Alkohole kommen zum Beispiel Ethylenglykol, Propandiol-(1,2) und -(1,3), Butandiol-(1,4) und -(1,3), Hexandiol-(1,6), Octandiol-(1,8), Neopentylglykol, 1,4 Bishydroxymethylcyclohexan, 2-Methyl-1,3-propandiol, 2,2,4-Trimethylpentandiol-1,3, Glycerin, Trimethylolpropan, Hexantriol-(1,2,6), Butantriol-(1,2,4), Trimethylolethan, Pentaerythrit, Chinit, Mannit und Sorbit, Methylgloykosid 1,4,3,6-Dianhydrohexite, ferner Diethylenglykol, Dipropylenglykol, Polypropylenglykole, Dibutylenglykol und Polybutylenglykole in Frage.

Die Polyester können anteilig endständige Carboxylgruppen aufweisen. Auch Polyester aus Lactonen, zum Beispiel ε-Caprolacton oder Hydroxycarbonsäuren, zum Beispiel ε-Hydroxycapronsäure, sind einsetzbar.

Auch die erfindungsgemäss in Frage kommenden, vorzugsweise zwei Hydroxylgruppen aufweisenden Polyether sind solche der an sich bekannten Art und werden zum Beispiel durch Polymerisation von Tetrahydrofuran und/oder Epoxiden wie Ethylenoxid, Propylenoxid, Butylenoxid, Styroloxid oder Epichlorhydrin mit sich selbst, zum Beispiel in Gegenwart von Bortrifluorid, oder durch Anlagerung dieser Epoxide, gegebenenfalls im Gemisch oder nacheinander, an Startkomponenten mit reaktionsfähigen Wasserstoffatomen wie Alkohole und Amine, zum Beispiel Wasser, Ethylenglykol oder Propylenglykol hergestellt. Um das wesentliche Kennzeichen der Hydrophobie der erfindungsgemässen Polyurethan(-harnstoffe) zu gewährleisten, dürfen die als Aufbaukomponenten eingesetzten Polyether nur maximal soviel Ethylenoxid enthalten, dass die resultierenden Polyurethan(-harnstoffe) weniger als 2 Gew.-% an Oxyethylen-Segmenten $-CH_2-CH_2O-$ enthalten. Vorzugsweise werden Oxyethylengruppen-freie Polyether zur Herstellung der erfindungsgemässen Polyurethan(-harnstoffe) eingesetzt.

Auch durch Vinylpolymerisate modifizierte Polyether, wie sie zum Beispiel durch Polymerisation von Styrol, Acrylnitril in Gegenwart von Polyethern entstehen (US-PS 3 383 351, 3 304 273, 3 523 093, 3 110 695; DE-PS 1 152 536), sind geeignet. Die anteilig gegebenenfalls mitzuverwendenden höherfunktionellen Polyether entstehen in analoger Weise durch an sich bekannte Alkoxylierung von höherfunktionellen Startermolekülen, zum Beispiel Ammoniak, Ethanolamin, Ethylendiamin, Trimethylolpropan, Glycerin oder Sucrose.

Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythiomischether, Polyhioetherester, Polythioetheresteramide.

Als Hydroxylgruppen aufweisende Polycarbonate kommen solche der an sich bekannten Art in Betracht, die zum Beispiel durch Umsetzung von Diolen wie Propandiol-(1,3), Butandiol-(1,4) und/oder Hexandiol-(1,6), mit Diarylcarbonaten, zum Beispiel Diphenlycarbonat, oder Phosgen, hergestellt werden können.

Zu den Polyesteramiden und Polyamiden zählen zum Beispiel die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend linearen Kondensate. Auch bereits Urethan- oder Harnstoffgruppen enthaltende Polyhydroxylverbindungen sind verwendbar.

Vertreter der genannten im erfindungsgemässen Verfahren zu verwendenden Polyisocyanat- und Hydroxyl-Verbindungen sind zum Beispiel in High Polymers, Vol. XVI, «Polyurethanes, Chemistry and Technology», von Saunders/Frisch, Interscience Publishers, New York, London, Band I, 1962, Seiten 32-42 und Seiten 44-54 und Band II, 1964, Seiten 5-6 und 198-199 sowie im Kunststoff-Handbuch Band VII, Vieweg-Höchtlen, Carl-Hanser-Verlag, München, 1966, zum Beispiel auf den Seiten 45 bis 71, beschrieben.

3. Verbindungen mit in Salzform überführbaren Gruppen, wie Carbonsäure- und/oder Sulfonsäuregruppen oder tertiäre Aminogruppen. Diese werden in Gestalt von primäre und/oder sekundäre Hydroxyl- und/oder Aminogruppen enthaltenden Verbindungen in die erfindungsgemässen Polyurethane eingebaut, zum Beispiel als Dimethylolpropionsäure, Weinsäure, Bis-(β-hydroxyethoxy)-benzoesäuren, Oxalkylierungsprodukte von Aminosäuren, wie Bis-(β-hydroxyethyl)-aminoessigsäure, Bis-(β-hydroxypropyl)-amino-capronsäure, Bis-(βhydroxyethyl)-aminobenzoesäuren;

Lysin, 3,5-Diaminobenzoesäure, 2,5-Diaminophenoxyessigsäure, Umsetzungsprodukte von Diaminen mit Chloressigsäure, zum Beispiel Bis-(β-amino-methyl)-glyzin, Umsetzungsprodukte von Diaminen mit Acrylsäuren, zum Beispiel 2-Aminoethyl-β-amino-propionsäure, 4-Amino-hexyl-β-aminopropionsäure, Aminoisophoryl-β-aminopropionsäure, Umsetzungsprodukte von Aminosäuren mit Acrylnitril unter anschliessender Hydrierung der Nitrilgruppen, zum Beispiel Bis-(γ-aminopropyl)-glycin, Bis-

(γ-amino-propyl)-δ-aminobuttersäure, Bis-(γ-amino-propyl)-4-aminobenzoesäure, Bis-(γ-aminopropyl)-4-aminocyclohexan-carbonsäure-1;

Diolsulfonsäuren sind zum Beispiel 1,4-Butansulfonsäure oder deren Oxalkylierungsprodukte, Oxalkylierungsprodukte von Aminosulfonsäuren, zum Beispiel Bis-(β-hydroxyethyl)taurin, Bis-(β-hydroxypropyl)-4-amino-benzolsulfonsäure;

Diaminosulfonsäuren sind zum Beispiel Umsetzungsprodukte von Diaminen mit β-Chlorethansulfonsäure, wie β-Aminoethyltaurin, 4-Amino-butyltaurin, Bis-(γ-amino-propyl)-taurin, ferner aromatische Diaminosulfonsäuren, wie Flavonsäure, 4,4'-Diamino-dibenzyl-2,2'-disulfonsäure, 2,6-Diaminotoluol-4-sulfonsäure. Diese Verbindungen haben vorzugsweise Molekulargewichte von etwa 120 bis 399.

Zur Salzbildung mit den Carbon- und/oder Sulfonsäuren und/oder Säuren des Phosphors dienen, sofern nicht durch innere Salzbildung erfolgt, Basen wie die Hydroxyde der Alkylmetalle, bevorzugt jedoch sind Ammoniak, tertiäre Amine wie Triethylamin, Tripropylamin, Triethanolamin, Tripropanolamin, Alkylmorpholine wie N-Methylmorpholin, ferner Dabco, Dimethylbenzylamine u.a.

Als einbaufähige, in Salze überführbare tertiäre Amine, eignen sich u.a. N-Alkyl-dialkanolamine wie N-Methyl-diethanolamin, N-Ethyl-dipropanolamin, N-Benzyl-diethanolamin, N-Cyclohexyl-diethanolamin, N-Phenyl-dipropanolamin, ferner N-Alkyldiamine, wie zum Beispiel N-Methyl-dipropylentriamin $CH_3N\ (CH_2 \cdot CH_2 \cdot CH_2 \cdot NH_2)_2$.

Zur Salzbildung dienen Quaternierungsmittel und/oder Säuren, zum Beispiel Diemethylsulfat, Benzylchlorid, p-Toluolsulfonsäuremethylester; Phosphorsäure, Essigsäure, Glykolsäure, Milchsäure, Weinsäure, Benzoesäure, Hydroxybenzoesäure, Zitronensäure.

Die Verbindungen 3, werden in A in solchen Mengen eingebaut, dass sie in A 0,01-0,5 Gew.-%, vorzugsweise 0,05-0,25 Gew.-% an in Salze überführbaren Gruppen ausmachen.

4. Im Sinne der Isocyanat-Additionsreaktion mindestens difunktionelle Verbindungen aus der Gruppe der Siliconharze, der aromatischen Hydroxypolyether, der aromatischen Hydroxypolyester und/oder der Perfluorcarbonharze. Im einzelnen handelt es sich dabei um

a) Polysiloxan-Segmente enthaltende Verbindungen mit mindestens zwei end- und/oder seitenständigen, gegenüber Isocyanaten reaktionsfähigen Gruppen mit Molekulargewichten von 194 bis 20 000, vorzugsweise bis 10 000, insbesondere von 300 bis 3000. Bevorzugt werden difunktionelle Polysiloxane mit organofunktionellen Endgruppen eingesetzt. Diese Verbindungen weisen Struktureinheiten der Formel $-O-Si(R)_2-$ auf, wobei R für einen $C_1$-$C_4$-Alkyl- oder einen Phenylrest, vorzugsweise jedoch für einen Methylrest, steht.

Erfindungsgemäss als Ausgangsmaterial geeignete organofunktionelle, lineare Polysiloxane sind beispielsweise in den DE-AS 1 114 632, 1 190 176, 1 248 287, 2 543 638 oder in den DE-OS 2 356 692, 2 445 648, 2 363 452, 2 427 273 oder 2 558 523 beschrieben. Die organofunktionellen Endgruppen stellen vorzugsweise aliphatische, gegebenenfalls Heteroatome wie insbesondere Sauerstoff enthaltende Kohlenwasserstoffreste dar, die eine Hydroxyl-, Carboxyl-, Mercapto- oder primäre bzw. sekundäre Aminogruppe aufweisen. Zu den bevorzugten carbofunktionellen Gruppen gehören primäre und sekundäre Hydroxylgruppen sowie sekundäre Aminogruppen. Besonders bevorzugt sind solche Ausgangsverbindungen, die endständig primäre Hydroxylgruppen aufweisen. Die organofunktionellen Gruppen können in den Ausgangsmaterialien beispielsweise in Form folgender carbofunktioneller Reste vorliegen:

$-CH_2-OH$, $-(CH_2)_4-OH$, $-CH_2-O-CH_2-CH_2-OH$,

$-CH_2-O-CH-CH_2-OH$, $-CH_2-S-CH_2-CH_2-$, $-CH_2SH$,
$CH_3$

$-CH_2-S-CH_2-CH_2-SH$, $-CH_2-CH_2-COOH$, $-CH_2-NH_2$,

$-(CH_2)_4-NH_2$, $-CH_2-NH-C_4H_9$ oder $-CH_2-NH-C_6H_{11}$.

Die organofunktionellen Polysiloxane weisen mindestens 1, vorzugsweise 3 bis 30, Struktureinheiten der Formel $-O-Si(R)_2-$ bei einem Molekulargewicht von 194 bis 20 000, bevorzugt 194 bis 10 000, besonders bevorzugt zwischen 300 und 3000 auf.

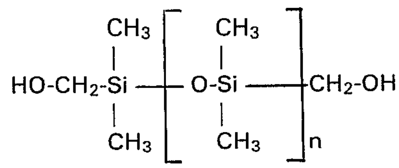
n = 3 bis 30

wie sie in an sich bekannter Weise, zum Beispiel nach dem Verfahren der DE-AS 1 236 505 hergestellt werden.

b) Durch Oxalkylierung von aromatischen Verbindungen mit mindestens zwei phenolischen Hydroxylgruppen hergestellte, hydroxyfunktionelle Polyether, die zu weniger als 10 Gew.-% aus Oxyethylen-Segmenten $-CH_2-CH_2-O-$ bestehen und Molgewichte von 226 bis 3000, vorzugsweise von 300 bis 2000 aufweisen. Bevorzugt werden difunktionelle Polyether dieser Art eingesetzt. Als Verbindungen mit mindestens zwei phenolischen Hydroxylgruppen zur Herstellung der erfindungsgemäss geeigneten aromatischen Polyether kommen zum Beispiel Hydrochinon, die isomeren Naphtalindiole, vorzugsweise aber Diole der allgemeinen Formel

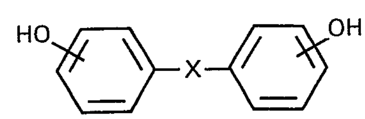

zur Anwendung.

In der letztgenannten Formel steht X für einen der zweiwertigen Reste -S-, -O-, $-SO_2-$, -CO- oder $-C(R_1R_2)-$ wobei $R_1$ und $R_2$ gleich oder verschieden sind und Wasserstoff oder $C_1$-$C_4$-Alkylreste darstellen oder wobei sich $R_1$ und $R_2$ zu einem cycloaliphatischen Ring mit 5 oder 6 Kohlenstoffatomen schliessen. Besonders bevorzugt sind solche Diole, in denen

X für $-C(R)_2-$, ganz besonders bevorzugt solche, in denen X für $-C(CH_3)_2-$ steht. Die erfindungsgemäss geeigneten aromatischen Hydroxylpolyether werden in an sich bekannter Weise durch Polyaddition von cyclischen Ethern an die obengenannten aromatischen Polyole hergestellt. Als cyclische Ether kommen zum Beispiel Ethylenoxid, Propylenoxid, Butylenoxid, Styroloxid oder auch Gemische dieser Verbindungen in Frage. Im Falle der (Mit-) Verwendung von Ethylenoxid dürfen nur solche Mengenanteile dieser Verbindung eingesetzt werden, dass gemäss obengenannter Bedingung die resultierenden aromatischen Polyether weniger als 10 Gew.-% an Oxethylen-Segmenten $-CH_2-CH_2-O-$ enthalten. Vorzugsweise wird ausschliesslich Propylenoxid verwendet.

Aus dem oben Gesagten geht hervor, dass als aromatische Hydroxylpolyether Addukte aus Bisphenol A und Propylenoxid ganz besonders bevorzugt sind.

c) Polyester der isomeren Benzoldicarbonsäuren mit mindestens zwei end- und/oder seitenständigen Hydroxylgruppen, Molekulargewichten von 250 bis 5000, vorzugsweise von 250 bis 2000 und Schmelzpunkten unterhalb von 150°C. Bevorzugt werden difunktionelle Polyester dieser Art eingesetzt. Es handelt sich dabei um an sich bekannte Kondensationsprodukte aus mehrwertigen, vorzugsweise zweiwertigen Alkoholen mit Phthalsäure, Isophthalsäure und/oder Terephthalsäure, wobei diese Säuren gegebenenfalls auch zum Beispiel durch Halogenatome, substituiert sein können. Anstelle der freien Dicarbonsäuren können selbstverständlich auch die entsprechenden Carbonsäureester niederer Alkohole oder im Falle der Phthalsäure auch deren Anhydrid zur Herstellung der erfindungsgemäss geeigneten aromatischen Polyester eingesetzt werden.

d) Perfluoralkylgruppen enthaltende Verbindungen mit mindestens zwei end- und/oder seitenständigen, gegenüber Isocyanaten reaktionsfähigen Gruppen und Molekulargewichten von 250-5000, vorzugsweise von 300 bis 2000. Bevorzugt werden Diole der genannten Art eingesetzt, die mindestens drei perfluorierte Kohlenstoffatome in Form von in die Hauptkette des Diols eingebauten und/oder seitenständig zu dieser angeordneten Perfluoralkylgruppen enthalten, wobei unter «Perfluoralkylgruppen» gesättigte, perfluorierte aliphatische Radikale zu verstehen sind, die eine lineare, verzweigte oder auch cyclische Struktur aufweisen können. Besonders bevorzugt werden Diole der genannten Art mit seitenständigen Perfluoralkylgruppen eingesetzt, wie sie zum Beispiel in der deutschen Patentanmeldung P-3 319 368.1 beschrieben sind. Beispiel für solche besonders gut geeigneten Aufbaukomponenten sind die N-Sulfonylperfluoralkyl-aminoalkanolderivate der allgemeinen Formel:

$$C_nF_{2n+1}-SO_2-N(-Y-OH)_2$$

worin

Y für einen linearen oder verzweigten gesättigten Alkylrest mit 2 bis 4 Kohlenstoffatomen und

n für eine ganze Zahl grösser als 2, vorzugsweise 5 bis 12 steht.

Die Polyurethane und/oder Polyurethanharnstoffe A) enthalten 1 bis 30 Gew.-% der mindest difunktionellen Verbindungen nach Punkt 4), wobei auch zwei oder mehrere der unter Punkt 4a-d) genannten, speziellen Aufbaukomponenten gemeinsam eingesetzt werden können.

5. Kettenverlängerungsmittel aus der Gruppe der Polyhydroxyl- und/oder der Polyaminoverbindungen mit Molekulargewichten bis zu 399. Im einzelnen handelt es sich dabei um

a) niedermolekulare Polyhydroxylverbindungen vom Molekulargewicht 62-399, vorzugsweise bis 300, wie zum Beispiel Ethandiol, Propandiol-1,2 und -1,3, Butandiol-1,4 und -1,3, Neopentylglykol und andere Pentandiole, Hexandiole, 1,4-3,6-Dianhydrohexite, Trimethylolpropan, Glycerin und Pentaerythrit. Bevorzugt werden Diole eingesetzt, insbesondere Alkylendiole mit 2-6 C-Atomen.

b) Polyamine und/oder Hydrazin und/oder Hydrazinderivate vom Molekulargewicht 32 bis 399, vorzugsweise bis 300. Bei den Polyaminen handelt es sich vorzugsweise um aliphatische oder cycloaliphatische Diamine, obwohl gegebenenfalls auch anteilig tri- oder höherfunktionelle Polyamine zur Erzielung eines gewissen Verzweigungsgrades mitverwendet werden können. Beispiele geeigneter aliphatischer Polyamine sind Ethylendiamin, Trimethylendiamin, Tetramethylendiamin, Hexamethylendiamin, Propylendiamin-1,2, das Isomerengemisch von 2,2,4- und 2,4,4-Trimethylhexamethylendiamin und Bis-(β-aminoethyl)-amin (Diethylentriamin).

Beispiele geeigneter cycloaliphatischer Polyamine sind:

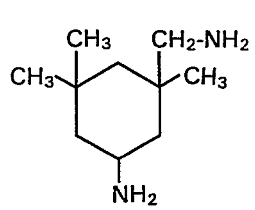

(Isophorondiamin)

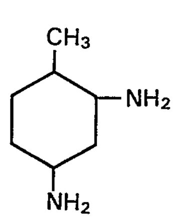

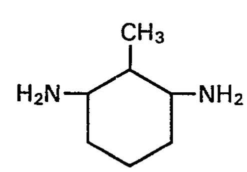

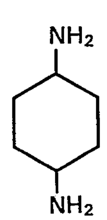

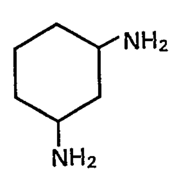

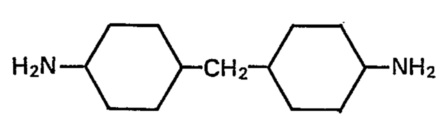

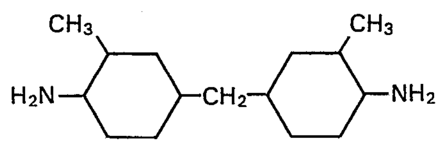

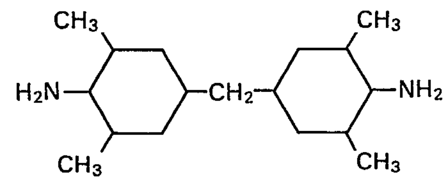

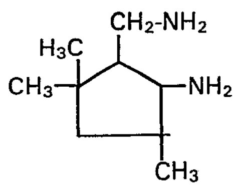

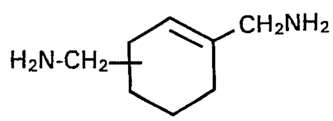

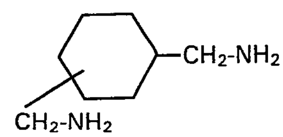

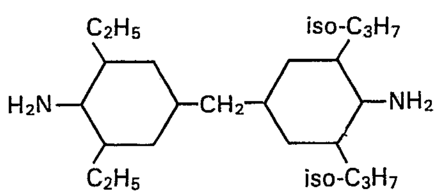

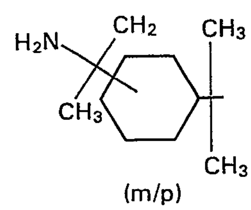

(m/p)

Auch araliphatische Polyamine, wie zum Beispiel 1,3- und 1,4-Xylylendiamin oder α, α, α', α'-Tetramethyl-1,3- und -1,4-xylylendiamin lassen sich als Kettenverlängerungsmittel für die erfindungsgemässen Polyurethane einsetzen. Bevorzugtes Diamin ist das Isophorondiamin bzw. das 4,4'-Diamino-dicyclohexylmethan (in Mengen von vorzugsweise ≥ 50 Mol-% der Diamine).

Beispiele geeigneter hydrazinischer Kettenverlängerungsmittel sind: Hydrazin, welches vorzugsweise in Form seines Hydrates einzusetzen ist und Hydrazinderivate mit mindestens zwei freien hydrazinischen Aminogruppen, wie zum Beispiel Carbodihydrazid, Adipinsäuredihydrazid oder β-Aminopropionsäurehydrazid oder β-Semicarbazido-propionsäurehydrazid.

Die Polyurethane bzw. Polyurethanharnstoffe A) werden vorzugsweise so hergestellt, dass zunächst aus den unter 1. beschriebenen Polyisocyanaten, den unter 2. beschriebenen höhermolekularen Polyhydroxylverbindungen, den unter 3. beschriebenen sauren und/oder basischen Diolen und den unter 4. beschriebenen, gegenüber Isocyanaten reaktiven Verbindungen aus der Gruppe der Siliconharze, der aromatischen Polyether-, der aromatischen Polyester- und/oder der Perfluorcarbonharze mindestens zwei endständige Isocyanatgruppen aufweisende NCO-Prepolymere hergestellt werden und diese dann in an sich bekannter Weise mit den unter 5. beschriebenen Kettenverlängerungsmitteln umgesetzt werden.

Bei Verwendung der unter 3. beschriebenen Diaminosäuren und/oder der tert. Stickstoff enthaltenden Diamine werden vorzugsweise diese zusammen mit den unter 5. beschriebenen Kettenverlängerern eingesetzt. Auch die unter 3. beschriebenen Dihydroxysäuren und/oder Dihydroxy-tert.-Amine können zur Umsetzung mit den Kettenverlängerern gemäss 5. kombiniert werden.

Vorzugsweise wird die Kettenverlängerung in organischer Lösung durchgeführt, wobei die organischen Lösungsmittel aus der nachstehend unter C) beschriebenen Gruppe an Lösungsmitteln ausgewählt werden. Ebenso gut ist es möglich und häufig sogar von Vorteil, Mischungen aus Lösungsmitteln und Nichtlösungsmitteln für die entstehenden Polyurethane bzw. Polyurethanharnstoffe A) als Reaktionsmedium bei der Kettenverlängerung einzusetzen, wobei gewährleistet sein muss, dass sich die Polyurethane bzw. Polyurethanharnstoffe A), zumindest in kolloidaler Form, in diesen Mischungen lösen. In diesem Fall werden die Lösungsmittel aus der nachstehend unter C) beschriebenen Gruppe an Lösungsmitteln und die Nichtlösungsmittel aus der nachstehend unter D) beschriebenen Gruppe an Nichtlösungsmitteln ausgewählt.

Bei der Kettenverlängerung in organischer Lösung arbeitet man im allgemeinen mit Feststoffgehalten von 10-50, vorzugsweise 20-40 Gew.-%. Die Viskositäten der kettenverlängerten Polyurethan(harnstoff-)Lösungen, gemessen bei Raumtemperatur, werden auf 10 000-100 000, vorzugsweise 20 000-60 000 mPas eingestellt. Zur Gewährleistung einer guten Viskositätsstabilität empfiehlt es

sich, nach Erreichen der gewünschten Lösungsviskosität monofunktionelle Kettenabbrecher, wie zum Beispiel die in DE-OS 3 142 706 beschriebenen Oxime, in den erforderlichen Mengen zuzugeben.

Grundsätzlich ist es auch möglich, die Polyurethane bzw. Polyurethanharnstoffe A) in an sich bekannter Weise mit Hilfe von geeigneten Mischaggregaten, wie zum Beispiel Reaktionsschnecken, in der Schmelze herzustellen und die nach Abkühlung, zum Beispiel in Form von Granulaten, erhaltenen Feststoffe zur Herstellung der erfindungsgemässen Streichpasten in den genannten Lösungsmitteln oder Lösungsmittel/Nichtlösungsmittel-Gemischen aufzulösen.

Art und Mengenverhältnis der bei der Herstellung von A) eingesetzten Ausgangsmaterialien werden im übrigen so gewählt, dass die resultierenden Polyurethane bzw. Polyurethanharnstoffe A) 0,01-0,5 Gew.-%, bevorzugt 0,05-0,25 Gew.-% an in Salze überführbaren Gruppen gemäss 3., 1 bis 30, vorzugsweise 1 bis 20 Gew.-% an Polymersegmenten enthalten, die durch den Einbau eines oder mehrerer der vorstehend unter 4. beschriebenen Aufbaukomponenten aus der Gruppe der Siliconharze, der aromatischen Hydroxypolyether, der aromatischen Hydroxypolyester und/oder der Perfluorcarbonharze entstanden sind. Besonders bevorzugt handelt es sich bei der Komponente A) um Polyurethanharnstoffe, die aus

a) 10-40 Gew.-% der vorstehend unter 1. beschriebenen Polyisocyanate und

b) 40-80 Gew.-% der vorstehend unter 2. beschriebenen höhermolekularen Polyhydroxylverbindungen und

c) soviel der vorstehend unter 3. beschriebenen Verbindungen mit den in Salzform überführbaren Gruppen und deren zugehörigen Salzbildnern, dass 0,05-0,25 Gew.-% an in Salzform überführbaren Gruppen enthalten sind und

d) 0-15 Gew.-% der vorstehend unter 4.a) beschriebenen Siliconharze und/oder

e) 0-15 Gew.-% der vorstehend unter 4.b) beschriebenen aromatischen Hydroxypolyether und/oder

f) 0-15 Gew.-% der vorstehend unter 4.c) beschriebenen aromatischen Hydroxypolyester und/oder

g) 0-15 Gew.-% der vorstehend unter 4.d) beschriebenen Perfluorcarbonharze mit gegenüber NCO reaktiven Endgruppen und

h) 0-20 Gew.-% der vorstehend unter 5.a) beschriebenen niedermolekularen Polyhydroxylverbindungen und/oder

i) 2-20 Gew.-% der vorstehend unter 5.b) beschriebenen Polyamine und/oder Hydrazine hergestellt sind,

wobei die Summe der Prozentanteile der Aufbaukomponenten c) bis g) 1-20%, vorzugsweise 3-20%, und die Summe der Komponenten a) bis i) 100 Gew.-% beträgt.

Neben der Komponente a) bis i) kann gegebenenfalls als zweiter Polyurethan(harnstoff) die Komponente B) bei der Formulierung der erfindungsgemässen Streichpasten mitverwendet werden. Es handelt sich bei B) um ganz analog zu A) aufgebaute Polyurethane bzw. Polyurethanharnstoffe, die jedoch nicht die speziellen Polymersegmente enthalten, die durch den Einbau der vorstehend beschriebenen Verbindungen 4. aus der Gruppe der Siliconharze, der aromatischen Hydroxypolyether, der aromatischen Hydroxypolyester und der Perfluorcarbonharze entstehen. Zur Herstellung der Komponente B) kann daher von der gleichen Palette an Ausgangsmaterialien ausgegangen werden wie vorstehend bei der Herstellung der Komponente A) beschrieben, mit Ausnahme der dort unter 4.a) bis d) genannten speziellen Aufbaukomponenten.

Die erfindungsgemäss geeigneten organischen Lösungsmittel C) sind flüssige, flüchtige organische Verbindungen, mit denen sich stabile Lösungen der Polyurethane bzw. Polyurethanharnstoffe A) und B) herstellen lassen. Der Begriff «Lösungen» umfasst in diesem Zusammenhang nicht nur echte, optisch klare Polymerlösungen, sondern auch sedimentationsstabile, Kolloid- oder Mikrogelanteile enthaltende organische Lösungssysteme. Vorzugsweise handelt es sich bei diesen Lösungsmitteln um Alkohole und/oder Ketone mit jeweils 4 bis 6 Kohlenstoffatomen, besonders bevorzugt um Isobutanol und/oder Methylethylketon.

Die erfindungsgemäss geeigneten organischen Nichtlösungsmittel D) sind flüssige, flüchtige organische Verbindungen, mit denen sich ohne weitere Zusätze keine stabilen Lösungen der Polyurethane bzw. Polyurethanharnstoffe A) und B) herstellen lassen. Vorzugsweise handelt es sich bei diesen Nichtlösungsmitteln um aromatische und/oder aliphatische Kohlenwasserstoffe mit 6 bis 10 Kohlenstoffatomen und/oder Fettsäureester mit 3 bis 7 Kohlenstoffatomen. Besonders bevorzugt werden Toluol, die isomeren Xylole und/oder die als «Solventnaphtha» bekannten handelsüblichen Gemische höhersiedender Kohlenwasserstoffe eingesetzt.

Neben den bisher genannten Hauptkomponenten A) - D) können die erfindungsgemässen Streichpasten gegebenenfalls noch übliche Beschichtungshilfsmittel E) wie zum Beispiel Vernetzer und/oder Hydrophobierungsmittel enthalten. Als Vernetzer, die insbesondere zur Verbesserung der Echtheiten der aus den Streichpasten hergestellten Beschichtungen gegenüber Reinigungsprozessen dienen können, eignen sich beispielsweise Melamin-Formaldehyd-Harze, und/oder blockierte oder freie Polyisocyanate und/oder Epoxidharz-Polyamin-Kombinationen, gegebenenfalls unter Zusatz von Vernetzungskatalysatoren. Als Hydrophobierungsmittel können, insbesondere wenn die Polyurethan(harnstoffe) A) keine der vorstehend unter 4.d) beschriebenen Fluor-haltigen Aufbaukomponenten enthalten, handelsübliche Fluorcarbonharze zugesetzt werden. Weiter sind übliche Verdickungsmittel, UV-, Licht- und Stickoxid-Stabilisatoren, Pigmente, Farbstoffe oder Füllstoffe in üblichen Mengen mitverwendbar.

Die erfindungsgemäss geeigneten Streichpasten enthalten die vorstehend beschriebenen Komponenten in den vorstehend genannten Mengenanteilen, vorzugsweise jedoch in folgenden Mengen:
5-30 Gew.-% A), 0 Gew.-% B), 5-40 Gew.-% C),

5-40 Gew.-% D), 0,5-5 Gew.-% E), 20-60 Gew.-% F).

Die Herstellung der Streichpasten geschieht jeweils durch Vermischen einer organischen hydrophoben Polyurethan-Phase mit einer wässrigen Phase unter Bildung eines stabilen, mehrphasigen, emulsionsartigen Gemisches. Wie vorstehend beschrieben, ist es bevorzugt, dass dabei die organische Phase die Polyurethan(harnstoffe) A) und gegebenenfalls B), die organischen Lösungsmittel C), gegebenenfalls die organischen Nichtlösungsmittel D) und gegebenenfalls die Beschichtungshilfsmittel E) enthält.

In die Lösung der Polyurethanharnstoffe A) und/oder B) in den Lösungsmitteln C), gegebenenfalls unter ganzem oder teilweisem Zusatz der Nichtlöser D) wird das Wasser F) ganz oder teilweise zugesetzt. Die zur Salzbildung in A) und/oder B) nötigen Mittel können ganz oder teilweise vor der Wasserzugabe eingearbeitet werden, können aber auch ganz oder teilweise im Wasser enthalten sein.

Die Beschichtungshilfsmittel E) können vor, während oder nach der Wasserzugabe der Streichpaste einverleibt werden.

Die Vermischung der organischen mit den wässrigen Phasen zur Herstellung der erfindungsgemäss geeigneten Streichpasten ist mit den in der Beschichtungstechnologie üblichen Rühraggregaten, wie zum Beispiel Dissolvern oder Dispersern durchzuführen. Die Streichpasten können daher aus den vorstehend beschriebenen organischen und wässrigen Vorprodukten vom Anwender dieser Beschichtungssysteme problemlos hergestellt werden. Die gebrauchsfertigen Pasten zeichnen sich durch hohe Homogenität und gute Lagerstabilität aus und bieten somit eine hohe Verarbeitungssicherheit.

Bei Bedarf können die Streichpasten auch in pigmentierter Form angewendet werden. Die Pigmentierung erfolgt dann vorzugsweise auf der Stufe der Streichpasten selbst: es ist aber auch möglich, die Vorprodukte, wie zum Beispiel die organischen Polyurethan-Lösungen zu pigmentieren. Dabei können in der Textilbeschichtung übliche organische und anorganische Pigmente eingesetzt werden.

Zur Durchführung des erfindungsgemässen Verfahrens werden die vorstehend beschriebenen Streichpasten nach den in der Textilbeschichtung bekannten Methoden entweder direkt auf Textil- oder Ledersubstrate gerakelt oder nach dem Transferverfahren verarbeitet, das heisst zunächst auf gegebenenfalls mit beliebigen Mustern geprägte Trennpapiere oder Matrizen gestrichen. Die Auflagemengen liegen hierbei zwischen 10 und 200 g/m², insbesondere 15-75 g/m² (Festsubstanz). Die Beschichtungen werden dann im Trockenkanal der Textilbeschichtungsmaschine Temperaturen von etwa 40-120, bevorzugt 50-80°C ausgesetzt, wobei die Temperatur gegebenenfalls sukzessive gesteigert werden kann. Dabei tritt infolge selektiver Verdampfung der Lösungsmittel die Koagulation ein.

Beim Transferverfahren wird nach dem Trocknen des ersten Striches (Deckstrich) ein zweiter Strich (Haftstrich) aufgebracht, woran sich das Aufkaschieren des Textilsubstrates, das Trocknen und das Abziehen des Trennpapiers anschliesst. Auch beim Direktbeschichtungsverfahren ist das Aufrakeln eines zweiten Striches (hier: Deckstrich) auf den getrockneten ersten Strich (hier: Grundstrich) vorteilhaft. Die für den zweiten Strich verwendeten Streichpasten sind ebenfalls solche der erfindungsgemässen, vorstehend beschriebenen Art und können die im ersten Strich verwendeten oder auch davon verschiedene Polyurethane enthalten. Beim Transferverfahren kann der zweite Strich allerdings auch aus herkömmlichen Dispersions- oder Lösungs-Haftstrichprodukten, die vorzugsweise mechanisch oder mit Hilfe von Treibmitteln geschäumt sind, hergestellt werden. Die Trocknung des zweiten Striches wird, wenn dieser aus einer erfindungsgemässen Streichpaste hergestellt wurde, unter den gleichen Bedingungen durchgeführt wie beim ersten Strich beschrieben. Grundsätzlich ist es auch möglich, nach dem erfindungsgemässen Verfahren Beschichtungen in drei- oder mehrschichtigem Aufbau herzustellen, wobei der letzte Strich auch ein kompakter Strich von geringer Auflage, zum Beispiel 3-15 g/m², bevorzugt 4-6 g/m² sein kann.

Die Koagulations- bzw. Trockenzeiten betragen pro Strich etwa 1-3 Min., was gemessen an anderen Verdampfungskoagulationsverfahren vergleichsweise hohe Arbeitsgeschwindigkeiten auf den Beschichtungsmaschinen ermöglicht. Wenn den Streichpasten thermisch härtende Vernetzer beigemischt sind, muss anschliessend an den Trocknungsprozess noch eine Vernetzung bei erhöhten Temperaturen, z.B. 120-200°C, vorzugsweise 140-160°C vorgenommen werden.

Die nach dem vorstehend beschriebenen Verfahren erhaltenen Beschichtungen weisen eine hohe Wasserdampfdurchlässigkeit, zumeist im technisch sehr erwünschten Bereich von 1 bis 15 mg/cm².h, vorzugsweise 2-10 mg/cm².h, bei gleichzeitig guter Wasserdichtigkeit und hoher Beständigkeit gegenüber Alterungs- und Reinigungsprozessen, auf. Die entsprechend beschichteten Textilien bzw. Leder eignen sich zum Beispiel zur Herstellung von hochwertigen Sport- und Regenbekleidungen, von Sport- und Freizeitausrüstungen sowie von Schuhmaterialien.

*Beispiele*

Die nachstehenden Beispiele dienen zur weiteren Erläuterung der Erfindung. Alle Prozentangaben beziehen sich, soweit nicht anders vermerkt, auf Gewichtsprozente.

Die in den Beispielen aufgeführten Beschichtungsprüfungen wurden nach folgenden Methoden durchgeführt:

— Wasserdichtigkeit nach DIN 53 886, gemessen in mm Wassersäule (mm WS)

— Wasserdampfdurchlässigkeit nach IUP 15 (DIN 53 333), gemessen in mg/cm².h

— Scrubb-Test nach SNV 198 498 (Schweizer Normenvereinigung)

*Beispiel 1*

I. *Herstellung der Polyurethanharnstoff-Lösung nach A)*

1660 g eines Polyester aus Diethylenglykol und

Adipinsäure der OH-Zahl 44, 30 g eines α, ω-Bishydroxymethyl-polydimethylsiloxans der OH-Zahl 100 und 3,5 g Dimenthylolpropionsäure werden entwässert und anschliessend mit 580 g Isophorondiisocyanat umgesetzt. Nach zweistündiger Reaktion bei 100°C ist ein NCO-Wert von 5,1% (Theorie: 5,3%) erreicht. Das so erhaltene Prepolymer wird mit 3300 g Toluol verdünnt und auf 25°C abgekühlt. Zu dieser Lösung lässt man unter gutem Rühren eine Lösung von 260 g Isophorondiamin in 3300 g Isobutanol zutropfen. Wenn eine Viskosität von 30 000-40 000 mPas erreicht ist, wird die Kettenverlängerung durch Zugabe von 40 g Butanonoxim abgestoppt. Man rührt 2 h bei 50°C nach und erhält eine 30%ige Polyurethanharnstofflösung mit einer Viskosität (25°C) von ca 30 000 mPas.

II. *Herstellung der Grundstrichpaste*

800 g der unter 1/I beschriebenen Lösung werden mit 240 g Toluol verdünnt. Dann fügt man 12 g einer 75%igen Lösung eines blockierten Polyisocyanats mit einem blockierten NCO-Gehalt von ca. 10% (beschrieben in DE-OS 3 313 236, Beispiel 4) von 12 g einer 50%igen wässrigen Melaminharz-Lösung (Hexamethoxymethylmelamin) hinzu. Es entsteht eine homogene, stabile Lösung mit eienr Viskosität (25°C) von ca. 10 000 mPas. In diese organische Lösung rührt man 40 g einer 10%igen wässrigen Lösung von Triethanolamin. Unter hochtourigem Rühren werden schliesslich 760 g Wasser zugegeben. Man erhält eine weisse, zweiphasige Streichpaste mit einem Feststoffgehalt von ca. 15% und einer Viskosität von ca. 10 000 mPas/25°C.

III. *Herstellung der Deckstrichpaste*

800 g der unter 1/I beschriebenen Lösung werden mit 240 g Toluol verdünnt. Dann fügt man 20 g der unter 1/II beschriebenen 50%igen wässrigen Melaminharzlösung hinzu. Es entsteht eine homogene, stabile Lösung mit einer Viskosität (25°C) von ca. 10 000 mPas.

In diese Lösung rührt man 4,0 g der unter 1/II beschriebenen 10%igen Triethanolamin-Lösung ein und gibt schliesslich unter hochtourigem Rühren 760 g Wasser zu. Man erhält eine weisse, zweiphasige Streichpaste mit einem Feststoffgehalt von ca. 14% und einer Viskosität von ca. 10 000 mPas.

IV. *Direktbeschichtung*

Substrat Polyamid:

Ein Polyamidgewebe von ca. 100 g/m² Warengewicht wird mit der Grundstrichpaste 1/II per Luftrakel beschichtet. Die Fahrbedingungen sind:

| | |
|---|---|
| Trockentemperatur: | 70°C/80°C/80°C |
| Geschwindigkeit: | 6 m/Min./15 m Trockentunnel |
| Auflage (trocken): | 5 g/m² |

Am zweiten Streichwerk wird mit der Deckstrichpaste 1/III über Walzenrakel der Deckstrich angebracht.

| | |
|---|---|
| Rakelspalt: | 0,23 mm |
| Trockentemperatur: | 70°C/70°C/70°C |
| anschl. Vernetzung bei: | 140-160°C |
| Auflage (trocken): | 20 g/m² |

Der Artikel zeichnet sich bei einer Gesamtauflage von 25 g/m² durch hohe Wasserdichtigkeit und hohe Wasserdampfdurchlässigkeit aus.

| | |
|---|---|
| Wasserdichtigkeit: | |
| – Original | 1300 mm WS |
| – 30°C-Wäsche 1 × | 1050 mm WS |
| 30°C-Wäsche 3 × | 900 mm WS |
| – Chemischreinigung 1 × | 900 mm WS |
| Chemischreinigung 3 × | 700 mm WS |
| Wasserdampfdurchlässigkeit: | 5 mg/cm².h |
| Scrubb-Test, 1000 Hübe, nass: | ohne Beschädigung |
| (WS = Wassersäule) | |

V. *Transferbeschichtung*

a) Streichpaste zur Herstellung des wasserdampfdurchlässigen Deckstrichs:

1000 g der unter 1/III beschriebenen, Wasser enthaltenden Deckstrichpaste werden mit 25 g ACRAMIN-Braun FRL (Bayer AG) pigmentiert.

b) Streichpaste zur Herstellung eines dünnen Vordeckstriches (nicht erfindungsgemäss):

1000 g der unter 1/I beschriebenen Polyurethanharnstoff-Lösung werden mit 150 g Toluol und 150 g Isobutanol verdünnt und mit 40 g ACRAMIN-Braun FRL pigmentiert.

c) Streichpaste zur Herstellung eines wasserdampfdurchlässigen Haftstrichs:

1000 g der unter 1/II beschriebenen, Wasser enthaltenden Grundstrichpaste werden mit 25 g ACRAMIN-Braun FRL pigmentiert.

d) Dispersionsschlagschaum zur Herstellung eines geschäumten Haftstrichs (nicht erfindungsgemäss):

Ein Gemisch aus 550 g der nachstehend beschriebenen wässrigen Polyurethan-Dispersion und 500 g der nachstehend beschriebenen wässrigen Polyacrylat-Dispersion, 6 g einer 50%igen wässrigen Ammonstearat-Lösung, 10 g der unter 1/II) beschriebenen 25%igen wässrigen Polyacrylsäure-Dispersion und 20 g einer 50%igen wässrigen Melaminharzlösung (Hexamethoxymethylmelamin) werden mit konzentrierter wässriger Ammoniak-Lösung auf einen pH-Wert von 9 eingestellt und mit einem Schnellrührer zu einem Schaum (500 g/l) geschlagen.

Zusammensetzung der Polyurethan-Dispersion:

82,4% Polyester aus Hexandiol-1,6, Neopentylglykol und Adipinsäure der OH-Zahl 66 (Gewichtsverhältnis Hexandiol: Neopentylglykol = 65:35), 14,6% Hexamethylendiisocyanat. 2,4% Na-Salz der 2-Aminoethyl-2-aminoethansulfonsäure und 0,6% Ethylendiamin: Feststoff 40%ig dispergiert in Wasser.

Zusammensetzung der Polyacrylat-Dispersion:

96% Butylacrylat, 1% Itaconsäure, 2,5% Acrylamid und 0,5% N-Mehtylolacrylamid: Feststoff 40%ig dispergiert in Wasser.

e) Artikel aus zwei Strichen:

Am 1. Streichwerk einer Tandem-Beschichtungsanlage wird auf ein handelsübliches Trennpapier die Streichpaste a) gerakelt.

| | |
|---|---|
| Rakelspalt: | 0,18 mm |
| Trockentemperatur: | 70°C/70°C/70°C |

| | |
|---|---|
| Verweilzeit im Trockenkanal: | 2,5 Min. |
| Auflage (trocken): | 15 g/m² |

Am zweiten Streichwerk wird die Paste c) mit einem Rakelspalt von 0,25 mm aufgebracht, und anschliessend wird eine gerauhte Baumwollware von ca. 140 g/m² Gewicht zukaschiert.

| | |
|---|---|
| Trockentemperatur: | 60°C/70°C/90°C |
| anschl. Vernetzung bei: | 150-160°C |

Man erhält einen weichen, geschmeidigen Artikel mit einer Gesamtauflage von ca. 35 g/m² und einer Wasserdampfdurchlässigkeit von 8 mg/cm² h, der sich zur Herstellung leichter Oberbekleidung eignet.

f) Artikel aus zwei Strichen:

Auf dem unter e) beschriebenen getrockneten Deckstrich wird am zweiten Streichwerk die Dispersionsschlagschaumpaste d) mit einem Rakelspalt von 0,3 mm aufgebracht. Anschliessend wird das unter e) beschriebene Baumwollsubstrat zukaschiert. Die Trocknung des Haftstriches erfolgt ansteigend bei 80°C/120°C/160°C. Man erhält einen weichen, fülligen Artikel mit einer Gesamtauflage von ca. 60 g/m² und einer Wasserdampfdurchlässigkeit von 7 mg/cm² h.

g) Artikel aus drei Strichen:

Am 1. Streichwerk einer Dreistrichanlage wird auf ein handelsübliches Trennpapier die Streichpaste b) gerakelt und durch Trocknung bei 60-120°C ein dünner, kompakter Vordeckstrich von 6 g/m² Feststoffauflage erzeugt.

Darauf wird am 2. Streichwerk mit der Paste a) der wasserdampfdurchlässige Deckstrich gerakelt: Fahrbedingungen: wie unter e) beschrieben: Auflage (trocken) 15 g/m².

Am 3. Streichwerk wird als Haftstrich die Dispersionschlagschaumpaste d) mit einem Rakelspalt von 0,3 mm aufgebracht. Anschliessend wird das unter e) beschriebene Baumwollsubstrat zukaschiert. Die Trocknung des Haftstrichs erfolgt ansteigend bei 80°C/120°C/160°C. Man erhält einen weichen, sehr fülligen Artikel mit einer Gesamtauflage von ca. 65 g/m² und einer Wasserdampfdurchlässigkeit von 6 mg/cm² h.

*Beispiel 2*

I. *Herstellung der Polyurethanharnstoff-Lösung nach A)*

2100 g eines Polyesters aus Diethylenglykol und Adipinsäure der OH-Zahl 44, 74 g eines α, ω-Bishydroxymethyl-polydimethylsiloxans der OH-Zahl 200 und 3,5 g 2,2-Dimethylolpropionsäure werden mit 580 g Isophorondiisocyanat bei 100°C umgesetzt bis ein NCO-Wert von 4,8% erreicht ist.

Das so erhaltene Prepolymer wird durch Zugabe von 2400 g Toluol verdünnt und auf 20°C abgekühlt. Unmittelbar vor Beginn der nun folgenden Kettenverlängerung verdünnt man noch weiter mit 1600 g Isobutanol.

Kettenverlängerung:

Eine getrennt hergestellte Lösung von 330 g 4,4'-Diaminodicyclohexylmethan im Gemisch von 1200 g Toluol und 1200 g Isobutanol wird zügig unter gutem Rühren zu der gekühlten Prepolymer-Lösung getropft. Mit steigender Viskosität werden nach und nach 950 g Isobutanol zugegeben. Wenn eine Viskosität von 30 000 bis 40 000 mPas erreicht ist, wird durch Zugabe von 30 g Butanoxim abgestoppt.

Man rührt 1 h bei 50°C nach und erhält eine klare Lösung mit einer Viskosität (25°C) von 40 000 mPas.

II. *Herstellung der Polyurethanharnstoff-Lösung nach A)*

2100 g eines Polyesters aus Diethylenglykol und Adipinsäure der OH-Zahl 44 und 3,5 g Dimethylolpropionsäure werden mit 500 g Isophorondiisocyanat bei 90-100°C umgesetzt bis ein NCO-Gehalt von 5,0% erreicht wird.

Das NCO-Prepolymer wird wie in I. mit 1700 g Toluol verdünnt, auf 20°C abgekühlt und sodann kurz vor Beginn des Umsatzes mit der Diaminlösung mit 1700 g Isobutanol versetzt.

Zur Kettenverlängerung lässt man eine Lösung von 330 g 4,4'-Diaminodicyclohexylmethan (H12MDA), gelöst in 1700 g Toluol und 1700 g Isobutanol, unter gutem Rühren zufliessen. Nach Erreichen einer Viskosität von ca. 40 000 mPas wird durch Zugabe von 30 g Butanonoxim die Reaktion abgestoppt. Die 30%ige Lösung hat bei 25°C eine Viskosität von 35 000 mPas.

III. *Herstellung der Grundstrichpaste*

600 g der unter 2/I beschriebenen PUR-Lösung A) und 200 g der unter 2/II eingestellten PUR-Lösung B) werden vermischt und mit 200 g Toluol verdünnt. Dieser verdünnten Lösung fügt man 15 g des in Beispiel 1/II beschriebenen blockierten Polyisocyanats und 5 g eines Epoxid-Harzes (LEKUTHERM X 50, Bayer AG, D-5090 Leverkusen) hinzu. Weiterhin rührt man 2,5 g einer 10%igen wässrigen Lösung von N-Methyl-morpholin zur Neutralisation der COOH-Gruppen ein. Unter hochtourigem Rühren werden in Anteilen 760 g Wasser eingearbeitet. Diese Streichpaste hat einen Feststoffgehalt von ca. 14% und eine Viskosität von ca. 10 000 mPas/25°C.

IV. *Herstellung der Deckstrichpaste*

700 g der unter 2/I beschriebenen PUR-Lösung werden mit 140 g Ethylacetat und 100 g Toluol verdünnt. Zu dieser Lösung fügt man 20 g eines 50%igen, wässrigen Melaminharzes gemäss Beispiel 1/II und 5 g eines Siliconharzes (SILOPREN E 50, Bayer AG). Anschliessend werden 10 g einer 10%igen wässrigen Ammoniak-Lösung zur Salzbildung hinzugesetzt. Zur Pastenbereitung werden schliesslich 750 g Wasser untergemischt. Die ca. 15%ige Streichpaste hat eine Viskosität (25°C) von ca. 15 000 mPas.

V. *Direktbeschichtung*

Ein Polyamidgewebe von ca. 90g/m² Gewicht wird mit der Grundstrichpaste 2/II per Luftrakel beschichtet. Die Fahrbedingungen in einem 15 m langen Trokkenrakel sind:

| | |
|---|---|
| Trockentemperatur: | 70°C/80°C/100°C/150°C |
| Geschwindigkeit: | 8 m/Min. |
| Auflage (trocken): | 5 g/m² |

Am zweiten Streichwerk wird die Deckstrichpaste 2/IV per Walzenrakel aufgebracht:

| | |
|---|---|
| Trockentemperatur: | 70°C über den gesamten Kanal |
| Rakelspalt: | 0,30 mm |
| Auflage (trocken): | 27 g/m² |

Nach Vernetzung (1 Min./160°C) wird der Artikel hydrophobiert (PERLIT SE, 30 g/l PERLIT SI/SW, 20 g/l)

| | Wasserdichtigkeit: |
|---|---|
| – Original | 1500 mm WS |
| – 30°C-Wäsche 1 × | 1000 mm WS |
| 30°C-Wäsche 3 × | 900 mm WS |
| – Chemischreinigung 1 × | 800 mm WS |
| Chemischreinigung 3 × | 700 mm WS |
| Wasserdampfdurchlässigkeit: | 5 mg/cm².h |
| Scrubb-Test, 1000 Hübe, nass: | ohne Beschädigung |

*Beispiel 3*

I. *Herstellung der Polyurethanharnstoff-Lösung nach A)*

1750 g des in 1/I beschriebenen Polyesters, 150 g eines ebenfalls in 1/I beschriebenen α, ω-Bishydroxymethyl-polydimethylsiloxans, 82 g Perfluorethylsulfonsäure-N-[bis-(2-oxyethyl)]-amid und 1,5 g Weinsäure werden mit 465 g Isophorondiisocyanat umgesetzt. Nach dreistündiger Reaktion bei 80-90°C ist ein NCO-Wert von 3,5% erreicht (berechnet 3,8%). Das NCO-Prepolymer wird mit 2100 g Toluol verdünnt, auf Raumtemperatur abgekühlt und mit einer Lösung von 135 g 1,4-Xylylendiamin in 1000 g Toluol und 3000 g Isobutanol unter Polyharnstoffpasten umgesetzt. Nach Erreichen einer Viskosität von ca. 40 000 mPas/25°C werden zur Abstoppung der Reaktion 20 g Butanonoxim beigefügt. Die 30%ige Lösung hat nach dreistündigem Nachrühren bei 50°C eine Viskosität von 35 000 mPas gemessen bei 25°C.

II. *Herstellung der Polyurethanharnstoff-Lösung nach A)*

2475 g des in 1/I beschriebenen Polyesters und 1,5 g Weinsäure werden wie in 3/I mit 466 g Isophorondiisocyanat umgesetzt. NCO-Wert 2,9% (berechnet 3,15%). Das NCO-Prepolymer wird mit 2600 g Toluol verdünnt und bei Raumtemperatur mit 135 g 1,4-Xylylendiamin in 100 g Toluol und 3600 g Isobutanol umgesetzt. Nach Erreichen einer Viskosität von 40 000 mPas/25°C wird wie in 3/I mit 20 g Butanonoxim die Reaktion abgestoppt.

III. *Herstellung der Grundstrichpaste*

900 g der unter 3/I beschriebenen PUR-Lösung A) und 100 der unter 3/II hergestellten PUR-Lösung B) werden vermischt und mit 400 g Toluol verdünnt. Dieser verdünnten Lösung fügt man 15 g des in Beispiel 1/II verwendeten Polyisocyanats zu und weiterhin 2 g einer 5%igen Lösung von Triethylamin in Wasser. Schliesslich wird unter hochtourigem Rühren 900 g Wasser in Anteilen eingearbeitet. Die ca. 16%ige Streichpaste hat eine Viskosität von ca. 15 000 mPas/25°C.

IV. *Herstellung der Deckstrichpaste*

800 g der unter 3/I beschriebenen PUR-Lösung A) werden mit 240 g Toluol verdünnt. Man fügt 20 g eines 50%igen, wässrigen Melaminharzes gemäss 1/II, 2 g einer 5%igen wässrigen Triethylamin-Lösung und 5 g einer 40%igen Lösung des Fluorcarbonharzes (Scotchgard FC-326, Fa, 3M) hinzu und arbeitet schliesslich 750 g Wasser unter intensivem Rühren ein. Die ca. 14%ige Steichpaste hat eine Viskosität von 10 000 mPas/25°C.

V. *Direktbeschichtung*

Ein Baumwollgewebe von ca 140 g/m² Warengewicht wird nach üblichen Methoden hydrophobiert (mit PERLIT SE ( 30 g/l) sowie PERLIT SI/SW (20g/l), Bayer AG) und nach Abquetschen im feuchten Zustand mit der Grundstrichpaste 3/III, per Luftrakel beschichtet.

| | |
|---|---|
| Trockentemperatur: | 70°C/80°C/100°C |
| Geschwindigkeit: | 6 m/Min. |
| Auflage (trocken): | 7 g/m² |

Am zweiten Streichwerk wird über Walzenrakel die Deckstrichpaste 3/IV gestrichen.

| | |
|---|---|
| Rakelspalt: | 0,35 mm |
| Trockentemperatur: | 70°C/70°C/70°C |
| anschl. Vernetzung bei: | 140-160°C |
| Auflage (trocken): | 28 g/m² |

| Wasserdichtigkeit: | |
|---|---|
| – Original | 1400-1500 mm WS |
| – 30°C-Wäsche 1 × | 1000-1100 mm WS |
| 30°C-Wäsche 3 × | 800- 900 mm WS |
| – Chemischreinigung 1 × | 950-1050 mm WS |
| Chemischreinigung 3 × | 650- 750 mm WS |
| Wasserdampfdurchlässigkeit: | 10 mg/cm².h |
| Scrubb-Test, 1000 Hübe, nass: | ohne Beschädigung |

*Beispiel 4*

I. *Herstellung der Polyurethanharnstoff-Lösung nach A)*

1750 g des in 1/I beschriebenen Polysters, 275 g eines Polyesters aus Ethylenglykol und Phthalsäure (OHZ 112) und 3,5 g Dimethylolpropionsäure werden mit 680 g 4,4-Diisocyanato-dicyclohexylmethan bei 80-90°C umgesetzt bis der NCO-Gehalt 4,9% beträgt (ber. 4,95%). Das NCO-Prepolymer wird mit 3250 g Toluol und 1000 g Methylethylketon verdünnt. Bei Raumtemperatur tropft man eine Lösung von 60 g Ethylendiamin und 28 g Hydrazinhydrat in 2250 g Isobutanol hinzu. Wenn die Viskosität der Lösung auf 40 000 mPas angestiegen ist, beendet man die Polyadditionsreaktion durch Zugabe von 20 g Butanonoxim. Die 30%ige Lösung hat eine Viskosität von ca. 35 000 mPas/25°C.

II. *Herstellung der Grundstrichpaste*

1000 g der unter 4/I beschriebenen Lösung werden mit 300 g Ethylacetat verdünnt. Zu dieser Lösung fügt man 15 g eines Polyaziridins (beschrieben

in der deutschen Patentanmeldung, P-3415920.7, Beispiel 3/IV) und 4,0 g einer 10%igen wässrigen Lösung von N-Methyl-tripropanolamin. Anschliessend werden 700 g Wasser eingearbeitet. Die ca. 15%ige Streichpaste hat eine Viskosität von 12 000 mPas/ 25°C.

III. *Herstellung der Deckstrichpaste*

1000 g der unter 4/I beschriebenen Lösung werden mit 350 g Toluol verdünnt; zu dieser Lösung fügt man 20 g des unter 1/II beschriebenen 50%igen, wässrigen Melaminharzes und 4,0 g einer 10%igen wässrigen Lösung von N-Methyl-bis-propanolamin. Durch Einarbeitung von 800 g Wasser wird eine ca. 14%ige Streichpaste erhalten, ca. 10 000 mPas.

IV. *Direktbeschichtung*

Mischgewebe aus Baumwolle und Polyester bzw. Polyamid (ca. 130 g/m² Warengewicht) werden nach dem Hydrophobieren gemäss 3/V im feuchten Zustand mit der Grundstrichpaste 4/II beschichtet, wie unter 3/V beschrieben. Anschliessend wird am zweiten Streichwerk, wie ebenfalls unter 3/V beschrieben, die Deckstrichpaste 4/III gerakelt.

Es können gleicherweise Mischgewebe aus Baumwolle und Polyamid beschichtet werden.

| | Polyester/ Baumwolle |
|---|---|
| Gesamtauflage | 28 g/m² |
| Wasserdichtigkeit: | |
| – Original | 1500 mm WS |
| – 30°C-Wäsche 1 × | 1000 mm WS |
| 30°C-Wäsche 3 × | 850 mm WS |
| – Chemischreinigung 1 × | 900 mm WS |
| Chemischreinigung 3 × | 700 mm WS |
| Wasserdampfdurchlässigkeit: | 5 mg/cm².h |
| Scrubb-Test, 1000 Hübe, nass: | ohne Beschädigung |

*Beispiel 5*

*I. Herstellung der Polyurethanharnstoff-Lösung nach A)*

1400 g eines Hexandiol-1,6-polycarbonats (OHZ 56), 138 g eines Dian*-gestarteten Polypropylenglykolpolyethers (OHZ 220) und 3,5 g Dimethylolpropionsäure werden bei 80-90°C mit 532 g Isophorondiisocyanat umgesetzt bis der NCO-Gehalt 5,5% beträgt (ber. 5,65%).

Das NCO-Prepolymer wird in 2600 g Toluol und 1000 g Methylethylketon gelöst und sodann mit einer Lösung von 152 g 1,4-Cyclohexandiamin in 1600 g Isobutanol bei Raumtemperatur umgesetzt. Nach Erreichen einer Viskosität von 25 000 mPas/ 25°C wird durch Zugabe von 20 g Butanonoxim die Polyadditionsreaktion abgebrochen; die Lösung ist ca. 30%ig.

II. *Herstellung der Grund- und Deckstrichpaste*

1000 g der unter 5/I hergestellten Lösung werden mit 750 g Methylisobutylketon verdünnt. Nach Zusatz von 3,0 g einer 10%igen Lösung von N-Methylmorpholin in Wasser werden 800 g Wasser eingearbeitet. Vor der Verarbeitung dieser Streichpaste werden noch 20 g einer 75%igen Lösung eines Polyisocyanats in Xylol/Methoxypropylacetat = 1:1 homogen verteilt. (Das Polyisocyanat ist ein Biuretpolyisocyanat aus Hexan-1,6-diisocyanat (Desmodur-N: BAYER AG, D-5090 Leverkusen)).

Die mittels dieser Streichpaste hergestellten Beschichtungsartikel zeichnen sich durch besonders gute Haftung des Polyurethans zum Substrat und durch sehr gute Lösemittelbeständigkeit der Polyurethan-Schicht aus.

*Beispiel 6*

I. *Herstellung der Polyurethanharnstoff-Lösung nach A)*

1530 g eines Polyesters aus Hexandiol-1,6-Neopentylglykol (Glykolverhältnis = 65:35) und Adipinsäure (OHZ 66), 110 g eines α, ω-Bishydroxy-methyl-polydimethylsiloxans (OHZ 100) und 3,5 g Dimethylolpropionsäure werden mit 800 g 4,4'-Diisocyanat-diphenylmethan bei 90°C umgesetzt bis ein NCO-Gehalt von 7,5% erreicht ist. Man verdünnt das NCO-Prepolymer mit 1500 g Methylethylketon, gibt 116 g Ethylenglykol zu und rührt bei 80°C bis ein NCO-Wert von 0,7% erreicht ist. Man verdünnt weiterhin mit 4250 g MEK und tropft dann bei Raumtemperatur eine Lösung von 15 g Hydrazinhydrat in 250 g Wasser hinzu: man erhält nach mehrstündigem Rühren eine 30%ige salbenartige, trübe Paste.

II. *Herstellung der Polyurethanharnstoff-Lösung nach B)*

1700 g des Polyesters 6/I, 3,5 g Dimethylolpropionsäure, 800 g 4,4'-Diisocyanatodiphenylmethan, 116 g Ethylenglykol und 15 g Hydrazinhydrat werden in 5850 g MEK und 250 Wasser in Analogie zu 6/I umgesetzt zu einer 30%igen salbenartigen Paste.

III. *Herstellung der Grundstrichpaste*

950 g Polyurethanharnstoff-Lösung nach A) (6/I) werden mit 50 g einer Lösung nach B) (6/II) vermischt. Nach Verdünnung mit 300 g Toluol werden 15 g eines blockierten Polyisocyanats gemäss 1/II und 15 g eines 50%igen Melaminharzes gemäss 1/II hinzugefügt und die COOH-Gruppen mit 5 g einer 10%igen Triethanolamin-Lösung in Wasser neutralisiert. Durch Einarbeitung von 800 g Wasser entsteht eine salbenartige, zweiphasige Paste von ca. 15% Feststoffgehalt.

IV. *Herstellung der Deckstrichpaste*

1000 g einer Mischung aus A + B wie in 6/III werden mit 300 g Hexan verdünnt. Nach Zugabe von 20 g eines 50%igen Melaminharzes gemäss 1/II werden in COOH-Gruppen mit 5 g einer 10%igen Triethanolamin-Lösung in Wasser neutralisiert. Durch Einarbeiten von 800 g Wasser entsteht eine 2-Phasen-Streichpaste.

V. *Direktbeschichtung*

Mit der Grundstrichpaste 6/III und der Deckstrich-

(*Dian = 4,4'-Dihydroxy-diphenyl-[2,2]-dimenthylmethan)

paste 6/IV lassen sich nach der im Beispiel 1 angegebenen Verfahrensweise auf Geweben aus Natur- und Synthesefasern weiche, wasserdampfdurchlässige Beschichtungen herstellen.

| | |
|---|---|
| Wasserdampfdurchlässigkeit: | 4-7 mg/cm² h |
| Wasserdichtigkeit: | 1200 mm WS |

*Beispiel 7*

I. *Herstellung der Polyurethanharnstoff-Lösung nach A)*

850 g Polytetramethylenglykolether (OHZ 112), 82 g α, ω-Bishydroxymethyl-polydimethylsiloxan (OHZ 200) werden mit 625 g 4,4'-Diisocyanato-diphenylmethan bei 90°C umgesetzt bis ein NCO-Gehalt von 8,0% erreicht ist. Man verdünnt das NCO-Prepolymer mit 1200 g Methylisobutylketon, setzt 71 g Ethylenglykol zu, lässt bei 80°C reagieren bis der NCO-Gehalt auf 1,3% gefallen ist. Man verdünnt weiterhin mit 800 g Methylisobutylketon und 1500 g Methylethylketon und tropft dann bei 20°C eine Lösung von 34 g Cyclohexan-1,4-diamin und 5,0 g Lysin-Natrium in 350 g Wasser zu. Es entsteht eine 30%ige weissliche, salbenartige Paste.

II. *Herstellung der Grundstrichpaste*

1000 g Polyurethanharnstoff-Lösung 7/I werden nach Verdünnen mit 300 g Toluol mit 15 g eines blockierten Polyisocyanats gemäss 1/II versetzt und anschliessend durch Einarbeiten von 800 g Wasser in die ca. 15%ige Streichpaste überführt.

III. *Herstellung der Deckstrichpaste*

1000 g Polyurethanharnstoff-Lösung 7/I werden nach dem Verdünnen mit 300 g Cyclohexan mit 20 g eines 50%igen Melaminharzes gemäss 1/II versetzt und durch Einarbeiten von 800 g Wasser wie unter 7/II in die Streichpaste überführt.

IV. *Direktbeschichtung*

Ausführung wie unter 6/V.

*Beispiel 8*

I. *Herstellung der PUR-Lösung nach A)*

900 g Polytetramethylenglykolether (OHZ 112), 55 g α, ω-Bishydroxymethylpoly-dimethylsiloxan (OHZ 200) werden mit 625 g 4,4'-Diisocyanato-diphenylmethan bei 90°C umgesetzt bis der NCO-Gehalt auf 7,9% gefallen ist. Man verdünnt das NCO-Prepolymer mit 1200 g Methylethylketon und lässt nach Zugabe von 68 g Ethylenglykol und 3,0 g N-Methyl-diethanolamin bei 80°C so lange reagieren, bis ein NCO-Gehalt von 1,7% erreicht ist. Zur Quaternierung fügt man 3,0 g Dimethylsulfat in 100 g Methylethylketon hinzu. Nach Verdünnung mit weiteren 2400 g Methylethylketon und Abkühlung auf 20°C tropft man eine Lösung von 20 g Hydrazinhydrat in 200 g Wasser hinzu. Man erhält eine ca. 30%ige, weissliche, salbenartige Paste.

II. *Herstellung der Grundstrichpaste*

1000 g der Polyurethanharnstoff-Lösung 8/I werden nach Verdünnen mit 300 g Methylacetat mit 15 g eines blockierten Polyisocyanats gemäss 1/II und 15 g eines 50%igen Melaminharzes gemäss 1/II versetzt und anschliessend durch Zugabe von 800 g Wasser in die ca. 15%ige Streichpaste überführt.

III. *Direktbeschichtung*

Ausführung wie in Beispiel 1.

Die Grundierung erfolgt mit der kationische Gruppen enthaltenden Grundstrichpaste 8/II: der Deckstrich wird mit der anionische Gruppen enthaltenden Deckstrichpaste 2/IV hergestellt.

| | |
|---|---|
| Gesamtauflage: | 30 g/m² |
| Wasserdampfdurchlässigkeit: | 6 mg/cm² h |
| Wasserdichtigkeit: | 1400 mm WS |

*Beispiel 9*

I. *Herstellung der PUR-Lösung nach A)*

1750 g des in 1/I beschriebenen Polyesters, 150 g des in 2/I beschriebenen α, ω-Bishydroxymethylpoly-dimethylsiloxans und 50 g eines basischen Polycarbonats (hergestellt aus 2 Mol eines Butandiol-1,4-polyadipats, OHZ 124, 1 Mol N-Methyl-bis-(3-aminopropyl)-amin und 2 Mol Diphenylcarbonat mit der OHZ 56) werden mit 580 g Isophorondiisocyanat bei 100°C umgesetzt bis der NCO-Gehalt von 5,3% erreicht ist. Nach Verdünnung des NCO-Prepolymeren mit 3000 g Toluol und 2000 g Methylethylketon und Abkühlen der Lösung auf 20°C wird zum Aufbau des Polyurethanharnstoffs eine Lösung von 270 g Isophorondiamin in 1500 g Isobutanol zugetropft. Man erhält eine 30%ige Lösung von 25 000 mPas/25°C.

II. *Herstellung der Grund- und Deckstrichpaste*

1000 g der Polyurethanharnstoff-Lösung 9/I werden mit 400 g Toluol verdünnt; man fügt der Lösung 15 g eines blockierten Polyisocyanats nach 1/II und 20 g eines Melaminharzes gemäss 1/II und 50 g einer 10%igen wässrigen Essigsäure hinzu. Zur Bereitung der Streichpaste werden 800 g Wasser in Anteilen eingerührt. Die Paste ist ca. 14%ig.

*Beispiel 10*

I. *Herstellung der PUR-Lösung nach A)*

2130 g des in 1/I beschriebenen Polyesters, 82 g des in 2/I beschriebenen einbaufähigen Bis-hydroxymethylpolydimethylsiloxans werden mit 655 g 4,4'-Diisocyanato-dicyclohexylmethan bei 100°C umgesetzt bis ein NCO-Wert von 4,4% erreicht ist. Nach Verdünnen des NCO-Prepolymeren mit 2800 g Toluol und 800 g Isobutanol fügt man bei 20°C eine Lösung von 238 g Isophorondiamin und 3,5 g N-Methyl-bis-(3-aminopropyl)-amin in 2200 g Isobutanol hinzu. Wenn die Viskosität 40 000 mPas/20°C erreicht hat, fügt man 10 g Butanonoxim hinzu und erwärmt 30 Min. lang auf 80°C. Die 35%ige Lösung hat bei 25°C eine Viskosität von 36 000 mPas.

II. *Herstellung der Grund- und Deckstrichpaste*

1000 g der Polyurethanharnstoff-Lösung 10/I werden mit 500 g Toluol verdünnt; man fügt 20 g eines blockierten Polyisocyanats nach 1/II und 20 g

eines Melaminharzes nach 1/II und 30 g einer 10%igen Milchsäurelösung hinzu. Zur Bereitung der Streichpaste werden 900 g Wasser eingemischt; Konzentration der Paste ca. 15%.

*Beispiel 11*

I. *Herstellung der PUR-Lösung nach A)*

1750 g des in 1/I beschriebenen Polyesters, 150 g des in 2/I beschriebenen α, ω-Bis-hydroxymethyl-polydimethylsiloxans und 10 g des Natrium-Salzes der Diolsulfonsäure gemäss DOS 3 134 161/Beispiel 1 werden mit 680 g 4,4'-Diisocyanato-dicyclohexylmethan bei 100°C umgesetzt bis ein NCO-Wert von 5,2% erreicht ist. Das NCO-Prepolymer wird in 3400 g Toluol gelöst und bei 20-30°C mit 270 g Isophorondiamin in 3300 g Isobutanol zum Polyharnstoff umgesetzt. Die 30%ige Lösung hat eine Viskosität von ca. 35 000 mPas.

II. *Herstellung der Grund- und Deckstrichpaste*

1000 g der Polyurethanharnstoff-Lösung 11/I werden mit 400 g Xylol verdünnt. Nach Zugabe von 15 g eines blockierten Polyisocyanats nach 1/II und 10 g eines Melaminharzes (Melaminhexamethylolmethylether, ca. 100%ig) werden zur Pastenbereitung 800 g Wasser eingerührt. Die Paste ist ca. 14,5%ig bei einer Viskosität von ca. 10 000 mPas/25°C.

*Beispiel 12*

I. *Herstellung der Polyurethanharnstoff-Lösung nach A)*

1600 g eines Polyesters aus Hexandiol-1,6-Neopentylglykol (Styrolverhältnis 65:35) und Adipinsäure (OHZ 56), 220 g des in Beispiel 6/I beschriebenen α, ω-Bishydroxymethyl-polydimethylsiloxans werden mit 620 g Isophorondiisocyanat bei 100°C umgesetzt bis ein NCO-Wert von 6,2% erreicht ist. Nach dem Lösen des NCO-Prepolymeren in 3200 g Toluol lässt man gleichzeitig eine Lösung von 305 g Isophorondiamin in 3200 g Isobutanol und 38 g N-(2-Amino)-taurin-Natrium in 100 g Wasser bei 20-30°C zutropfen. Man erhält eine 30%ige Lösung von ca. 35 000 mPas/25°C.

II. *Herstellung der Grund- und Deckstrichpaste*

1000 g der Polyurethanharnstoff-Lösung 12/I werden mit 500 g Waschbenzin verdünnt. Nach Zugabe von 15 g eines blockierten Polyisocyanats und 10 g eines Melaminharzes gemäss 11/II werden 750 g Wasser dispergiert. Die ca. 14%ige Streichpaste hat eine Viskosität von ca. 15 000 mPas/25°C.

*Beispiel 13*

I. *Herstellung der Polyurethanharnstoff-Lösung nach A)*

1100 g des in Beispiel 5/I beschriebenen Hexandiol-1,6-polycarbonats, 640 g Dihydroxypolypropylenglykol (OHZ 40), 110 g α, ω-Bis-hydroxymethylpolydimethylsiloxan (OHZ 200), 3,5 g N-Bis-(2-hydroxyethyl)-glycin werden mit 655 g 4,4'-Diisocyanato-dicyclohexylmethan bei 80°C umgesetzt bis ein NCO-Wert von 5,0% erreicht ist. Dieses NCO-Prepolymer wird in 3200 g Toluol gelöst und dann bei 20°C unter Zugabe von 255 g Isophorondiamin in 3100 g Isobutanol und 100 g Wasser zum Polyurethanharnstoff umgesetzt. Die 30%ige Lösung hat eine Viskosität von ca. 40 000 mPas/25°C.

II. *Herstellung der Grund- und Deckstrichpaste*

1000 g der Polyurethanharnstoff-Lösung 13/I wird mit 400 g Waschbenzin und 100 g Solvesso® 100 verdünnt. Nach dem Dispergieren von 750 g Wasser werden in das zweiphasige System 15 g eines blockierten Polyisocyanats nach 1/II und 20 g eines Melaminharzes gemäss 1/II eingerührt. Die Streichpaste hat eine Viskosität von ca. 20 000 mPas/25°C.

*Beispiel 14*

I. *Herstellung der Polyurethanharnstoff-Lösung nach A)*

1500 g Dihydroxypolycaprolacton (gestartet auf Diethylenglykol, OHZ 56), 122 g α, ω-Bis-hydroxymethylpolydimethylsiloxan (OHZ 200), 6,0 g N-Bis-(3-aminopropyl)-β-alanin werden mit 575 g Isophorondiisocyanat bei 80°C umgesetzt bis der NCO-Wert von 6,0% erreicht ist. Nach dem Verdünnen mit 3000 g Toluol wird bei 20°C eine Lösung von 380 g 3,3'-Dimethyl-4,4'-diamino-dicyclohexylmethan in 3000 g Isobutanol als Kettenverlängerer zugetropft. Man erhält eine 30%ige Polyharnstoff-Lösung von 35 000 mPas/25°C.

II. *Herstellung der Grund- und Deckstrichpaste*

1000 g der Lösung 14/I werden analog 13/II in eine zweiphasige Streichpaste überführt. Viskosität ca. 15 000 mPas/25°C.

**Patentansprüche**

1. Verwendung von Polyurethan-Kunststoffe enthaltenden, gegebenenfalls pigmentierten Streichpasten zur Herstellung von wasserdampfdurchlässigen Beschichtungen auf Textil- oder Ledersubstraten im Direkt- oder Transferverfahren nach dem Prinzip der Verdampfungskoagulation, dadurch gekennzeichnet, dass die Streichpasten mehrphasige Gemische sind aus

A) 5-50 Gew.-% an sich hydrophoben Polyurethanen und/oder Polyurethanharnstoffen, die 0,01-0,5 Gew.-% in Salze überführbare Gruppen, die teilweise oder ganz in Salze überführt sind, und 1-30 Gew.-% Siliconharze mit gegenüber NCO reaktiven Endgruppen und/oder aromatische Hydroxypolyether und/oder aromatische Hydroxypolyester und/oder Perfluorcarbonharze mit gegenüber NCO reaktiven Endgruppen als weitere Aufbaukomponenten eingebaut enthalten,

B) 0-30 Gew.-% an sich hydrophoben Polyurethanen und/oder Polyurethanharnstoffen, die 0,01-0,5 Gew.-% in Salze überführbare Gruppen eingebaut enthalten und ohne die unter A) genannten speziellen Aufbaukomponenten hergestellt sind,

C) 5-50 Gew.-% organischen Lösungsmitteln für A) und B),

D) 0-40 Gew.-% organischen Nichtlösungsmitteln für A) und B),

E) 0-5 Gew.-% Vernetzungsmitteln, Hydrophobierungsmitteln und/oder weiteren Beschichtungshilfsmitteln,

F) 10-70% Wasser,

wobei die Summe der Komponenten A) bis F) 100 Gew.-% beträgt.

2. Verwendung gemäss Anspruch 1, dadurch gekennzeichnet, dass die Streichpasten mehrphasige Gemische sind aus

A) 5-50 Gew.-% an sich hydrophoben Polyurethanen und/oder Polyurethanharnstoffen, die 0,01-0,5 Gew.-% Carbonsäure- und/oder Sulfonsäure-Gruppen, die ganz oder teilweise mit Basen in Salze überführt sind, und 1-30 Gew.-% Siliconharze mit gegenüber NCO reaktiven Endgruppen, aromatische Hydroxypolyether-, aromatische Hydroxypolyester- und/oder Perfluorcarbonharze mit gegenüber NCO reaktiven Endgruppen als weitere Aufbaukomponenten eingebaut enthalten,

B) 0-30 Gew.-% an sich hydrophoben Polyurethanen und/oder Polyurethanharnstoffen, die 0,01-0,5 Gew.-% Carbonsäure- und/oder Sulfonsäure-Gruppen, die ganz oder teilweise mit Basen in Salze überführt sind, eingebaut enthalten und ohne die unter A) genannten speziellen Aufbaukomponenten hergestellt sind,

C) 5-50Gew.-% organischen Lösemitteln für A) und B),

D) 0-40 Gew.-% organischen Nichtlösemitteln für A) und B),

E) 0-5 Gew.-% Vernetzungsmitteln, Hydrophobierungsmitteln und/oder weiteren Beschichtungshilfsmitteln und Zusatzstoffen,

F) 10-70% Wasser,

wobei die Summe der Komponenten A) bis F) 100 Gew.-% beträgt.

3. Verwendung gemäss Anspruch 1, dadurch gekennzeichnet, dass die Streichpasten mehrphasige Gemische sind aus

A) 5-50 Gew.-% an sich hydrophoben Polyurethanen und/oder Polyurethanharnstoffen, die 0,01-0,5 Gew.-% tertiäre Stickstoffatome, die ganz oder teilweise mit Säuren oder Quaternierungsmitteln in Salze überführt sind und 1-30 Gew.-% der Siliconharze mit gegenüber NCO reaktiven Endgruppen, aromatische Hydroxypolyether, aromatische Hydroxypolyester und/oder Perfluorcarbonharze mit gegenüber NCO reaktive Endgruppen als weitere Aufbaukomponenten eingebaut enthalten,

B) 0-30 Gew.-% an sich hydrophoben Polyurethanen und/oder Polyurethanharnstoffen, die 0,01-0,5 Gew.-% tertiäre Stickstoffatome, die ganz oder teilweise mit Säuren oder Quaternierungsmitteln in Salze überführt sind, eingebaut enthalten und ohne die unter A) genannten speziellen Aufbaukomponenten hergestellt sind,

C) 5-50Gew.-% organischen Lösemitteln für A) und B),

D) 0-40 Gew.-% organischen Nichtlösemitteln für A) und B),

E) 0-5 Gew.-% Vernetzungsmitteln, Hydrophobierungsmitteln und/oder weiteren Beschichtungsmitteln,

F) 10-70% Wasser,

wobei die Summe der Komponenten A) bis F) 100 Gew.-% beträgt.

4. Verwendung gemäss Ansprüchen 1 und 2, dadurch gekennzeichnet, dass die Polyurethane und/oder Polyurethanharnstoffe A) und B) 0,01-0,5 Gew.-% Carbonsäure- und/oder Sulfonsäuregruppen, die ganz oder teilweise mit Basen in Salze überführt sind, enthalten, wobei die COOH- und/oder $SO_3H$-Gruppen tragenden Verbindungen über mindestens zwei gegenüber Isocyanaten reaktionsfähige Gruppen in das Polyurethan eingebaut sind.

5. Verwendung gemäss Ansprüchen 1 und 3, dadurch gekennzeichnet, dass die Polyurethane und/oder Polyurethanharnstoffe A) und B) 0,01-0,5 Gew.-% tertiäre Stickstoffatome, die ganz oder teilweise mit Säuren oder Quaternierungsmitteln in Salze überführt sind, enthalten, wobei die tertiäre Stickstoffatome tragenden Verbindungen über mindestens zwei gegenüber Isocyanaten reaktionsfähige Gruppen in das Polyurethan eingebaut sind.

6. Verwendung gemäss Ansprüchen 1 bis 5, dadurch gekennzeichnet, dass die Polyurethane und/oder Polyurethanharnstoffe A) 1-30 Gew.-% an Polysiloxan-Segmente enthaltenden Verbindungen mit mindestens zwei end- und/oder seitenständigen, gegenüber Isocyanaten reaktionsfähigen Gruppen und/oder an durch Oxalkylierung von aromatischen Verbindungen mit mindestens zwei phenolischen Hydroxylgruppen hergestellten Hydroxypolyethern, wobei diese Polyether zu weniger als 10 Gew.-% aus Oxethylen-Segmenten $-CH_2-CH_2-O-$ bestehen, und/oder an Hydroxypolyestern der isomeren Benzoldicarbonsäuren mit mindestens zwei end- und/oder seitenständigen Hydroxylgruppen und/oder an Perfluoralkylgruppen enthaltenden Verbindungen mit mindestens zwei end- und/oder seitenständigen, gegenüber Isocyanaten reaktionsfähigen Gruppen als Aufbaukomponenten im Polyurethan eingebaut enthalten.

7. Verwendung gemäss Ansprüchen 1 bis 6, dadurch gekennzeichnet, dass die organischen Lösungsmittel C) Alkohole und/oder Ketone mit jeweils 4 bis 6 Kohlenstoffatomen, und dass die organischen Nichtlösungsmittel D) aromatische und/oder aliphatische Kohlenwasserstoffe mit 6-11 Kohlenstoffatomen und/oder Fettsäureester mit 3-7 Kohlenstoffatomen sind.

8. Verwendung gemäss Ansprüchen 1 bis 7, dadurch gekennzeichnet, dass die Streichpasten oder im pigmentierten Fall deren Bindemittel, mehrphasige Gemische sind aus

A) 5-30 Gew.-% an sich hydrophoben Polyurethanharnstoffen, die aus

a) 10-40 Gew.-% organischen Polyiscocyanaten und

b) 40-80 Gew.-% aliphatischen Polyhydroxylverbindungen vom Molekulargewicht 600-5000 und

c) einem Gewichtsanteil an Carbonsäuren und/oder Sulfonsäuren, die ganz oder teilweise mit Basen in Salze überführt sind, mit mindestens zwei primären oder sekundären Hydroxyl- und/oder Aminogruppen und einem Molekulargewicht von

120-399, der einem Anteil von 0,01-0,5 Gew.-% Carbonsäure- und/oder Sulfonsäuregruppen entspricht, oder
einem Gewichtsanteil an tertiären Aminen, die ganz oder teilweise mit Säuren oder Quaternierungsmitteln in Salze überführt sind, mit mindestens zwei primären oder sekundären Hydroxyl- und/oder Aminogruppen und einem Molekulargewicht von 120-399, der einem Anteil von 0,01-0,5 Gew.-% an in Salze überführbaren Gruppen entspricht,
d) 0-15 Gew.-% Dihydroxymethylpolydimethylsiloxan vom Molekulargewicht 300-3000 und/oder
e) 0-15 Gew.-% oxalkylierten Bis-(hydroxyphenyl)-alkanen vom Molekulargewicht 300-2000 mit weniger als 10 Gew.-% Oxyethylen-Segmenten $-CH_2-CH_2-O-$ und/oder
f) 0-15 Gew.-% mindestens zwei end- und/oder seitenständigen Hydroxylgruppen aufweisenden Polyestern der isomeren Phthalsäuren vom Molekulargewicht 200-2000 und/oder
g) 0-15 Gew.-% Diolen mit mindestens drei perfluorierten Kohlenstoffatomen enthaltenden Perfluoralkylgruppen vom Molekulargewicht 300-2000 und
h) 0-20 Gew.-% Polyhydroxylverbindungen vo Molekulargewicht 62-300 und/oder
i) 2-20 Gew.-% Polyaminen und/oder Hydrazin und/oder Hydrazinderivaten vom Molekulargewicht 32-300

hergestellt sind, wobei die Summe der Prozentanteile der Aufbaukomponenten c) bis g) 3-20% und die Summe der Komponenten a) bis i) 100 Gew.-% beträgt,

B) 0-20 Gew.-% Polyurethanharnstoffen analog A) aus a) - c), h) und i) ohne d) - g),

C) 5-40 Gew.-% Alkoholen und/oder Ketonen mit jeweils 4-6 Kohlenstoffatomen und/oder Gemischen aus diesen Alkoholen mit aromatischen Kohlenwasserstoffen D), vorzugsweise mit mindestens 7 Kohlenstoffatomen,

D) 5-40 Gew.-% aromatischen und/oder aliphatischen Kohlenwasserstoffen mit 6-11 Kohlenstoffatomen und/oder Fettsäureestern mit 3-7 Kohlenstoffatomen, wobei Gemische aus Alkoholen C) und aromatischen Kohlewasserstoffatomen D) mit mindestens 7 Kohlenstoffatomen bevorzugt sind,

E) 0-5 Gew.-% Vernetzungsmitteln, Hydrophobierungsmitteln und/oder weiteren Beschichtungshilfsmitteln

F) 20-60 Gew.-% Wasser,

wobei die Summe der Komponenten A) bis F) 100 Gew.-% beträgt.

9. Verfahren zur Herstellung der Streichpasten entsprechend der Zusammensetzung nach den Ansprüchen 1 bis 8, dadurch gekennzeichnet, dass die mehrphasigen Streichpasten hergestellt sind durch Vermischen von Lösungen der Polyurethane bzw. Polyurethanharnstoffe A) und gegebenenfalls B) in den organischen Lösungsmitteln C), gegebenenfalls unter Zusatz der organischen Nichtlösungsmittel D) und der Beschichtungshilfsmittel E) und anschliessendem Vermischen mit Wasser F).

10. Polyurethan-Kunststoffe enthaltende, gegebenenfalls pigmentierte Streichpasten, dadurch gekennzeichnet, dass die Streichpasten mehrphasige Gemische aus den Komponenten A) bis F) entsprechend der Zusammensetzung nach den Ansprüchen 1 bis 8 sind.

**Claims**

1. Use of pigmented or unpigmented coating pastes which contain polyurethane plastics for producing water vapour permeable coatings on textile or leather substrates in the direct or transfer process by the principle of evaporation coagulation, characterized in that the coating pastes are multiphase mixtures of

A) 5-50% by weight of intrinsically hydrophobic polyurethanes and/or polyurethaneureas which contain 0.01-0.5% by weight of groups which are convertible into salts and which have been partly or wholly converted into salts, and
1-30% by weight of silicone resins having end groups reactive towards NCO and/or of aromatic hydroxypolyethers and/or of aromatic hydroxypolyesters and/or of perfluorocarbon resins having end groups which are reactive towards NCO, built-in as further build-up components,

B) 0-30% by weight of intrinsically hydrophobic polyurethanes and/or polyurethaneureas which contain in built-in form from 0.01-0.5% by weight of groups convertible into salts and which have been prepared without the specific build-up components mentioned under A),

C) 5-50% by weight of organic solvents for A) and B),

D) 0-40% by weight of organic nonsolvents for A) and B),

E) 0-5% by weight of crosslinking agents, hydrophobizing agents and/or further coating auxiliary agents,

F) 10-70% by weight of water,

the total of components A) to F) being 100% by weight.

2. Use according to Claim 1, characterized in that the coating pastes are multi-phase mixtures of

A) 5-50% by weight of intrinsically hydrophobic polyurethanes and/or polyurethaneureas which contain 0.01-0.5% by weight of carboxyl and/or sulphonyl groups which have been wholly or partly converted with bases into salts and
1-30% by weight of silicone resins having end groups reactive towards NCO, or aromatic hydropolyether resins, aromatic hydroxypolyesters resins and/or perfluorocarbon resins having end groups reactive towards NCO, built-in as further build-up components,

B) 0-30% by weight of intrinsically hydrophobic polyurethanes and/or polyurethaneureas which contain in built-in form from 0.01-0.5% by weight of carboxyl and/or sulphonyl groups which have been wholly or partly converted with bases into salts and prepared without the specific build-up components mentioned under A),

C) 5-50% by weight of organic solvents for A) and B),

D) 0-40% by weight of organic nonsolvents for A) and B),

E) 0-5% by weight of crosslinking agents, hydrophobising agents and/or further coating auxiliary agents and additives,

F) 10-70% by weight of water,

the total of components A) to F) being 100% by weight.

3. Use according to Claim 1, characterized in that the coating pastes are multi-phase mixtures of

A) 5-50% by weight of intrinsically hydrophobic polyurethanes and/or polyurethaneureas which contain 0.01-0.5% by weight of tertiary nitrogen atoms which have been wholly or partly converted with acids or quaternizing agents into salts, and 1-30% by weight of silicone resins having end groups reactive towards NCO, of aromatic hydrooxypolyethers, of aromatic hydroxypolyesters and/or perfluorocarbon resins having end groups reactive towards NCO, built-in as further build-up components,

B) 0-30% by weight of intrinsically hydrophobic polyurethanes and/or polyurethaneureas which contain in built-in form from 0.01-0.5% by weight of tertiary nitrogen atoms which have been wholly or partly converted with acids of quaternizing agents into salts and prepared without the specific build-up components mentioned under A),

C) 5-50% by weight of organic solvents for A) and B),

D) 0-40% by weight of organic nonsolvents for A) and B),

E) 0-5% by weight of crosslinking agents, hydrophobizing agents and/or further coating auxiliary agents,

F) 10-70% by weight of water,

the total of components A) to F) being 100% by weight.

4. Use according to Claim 1 and 2, characterized in that the polyurethanes and/or polyurethaneureas A) and B) contain 0.01-0.5% by weight of carboxyl and/or sulphonyl groups which have been wholly or partly converted with bases into salts, the COOH- and/or $SO_3H$-carrying compounds having been built into the polyurethane by a least two groups reactive towards isocyanates.

5. Use according to Claims 1 and 3, characterized in that the polyurethanes and/or polyurethaneureas A) and B) contain 0.01-0.5% by weight of tertiary nitrogen atoms which have been converted wholly or partly with acids or quaternizing agents into salts, the compounds which carry tertiary nitrogen atoms having been built into the polyurethane by at least two groups reactive towards isocyanates.

6. Use according to Claims 1 to 5, characterized in that the polyurethanes and/or polyurethaneureas A) contain 1-30% by weight of compounds which contain polysiloxane segments and have at least two terminal and/or lateral groups reactive towards isocyanates and/or of hydroxypolyethers prepared by alkoxylation of aromatic compounds having at least two phenolic hydroxyl groups, these polyethers consisting to an extent of less than 10% of oxyethylene segments $-CH_2-CH_2-O-$, and/or of hydroxypolyesters of isomeric benzenedicarboxylic acids having at least two terminal and/or lateral hydroxyl groups and/or of perfluoralkyl-containing compounds having at least two terminal and/or lateral groups reactive towards isocyanates, built into the polyurethane as build-up components.

7. Use according to Claims 1 to 6, characterized in that the organic solvents C) are alcohols and/or ketones each having 4 to 6 carbon atoms and in that the organic nonsolvents D) are aromatic and/or aliphatic hydrocarbons having 6-11 carbon atoms and/or fatty acid esters having 3-7 carbon atoms.

8. Use according to Claims 1 to 7, characterized in that the coating pastes or, if pigmented, their binders are multi-phase mixtures of

A) 5-30% by weight of intrinsically hydrophobic polyurethaneureas which have been prepared from

a) 10-40% by weight of organic polyisocyanates and

b) 40-80% by weight of aliphatic polyhydroxyl compounds of molecular weight 600-5000 and

c) a weight proportion of carboxylic acids and/or sulphonic acids which have been wholly or partly converted with bases into salts, having at least two primary or secondary hydroxyl and/or amino groups and a molecular weight of 120-399, which corresponds to a proportion of 0.01-0.5% by weight of carboxylic and/or sulphonyl groups, or a weight proportion of tertiary amines which have been wholly or partly converted with acids or quaternizing agents into salts having at least two primary or secondary hydroxyl and/or amino groups and a molecular weight of 120-399, which corresponds to a proportion of 0.01-0.5% by weight of groups convertible into salts.

d) 0-15% by weight of dihydroxymethylpolydimethylsiloxane of molecular weight 300-3000 and/or

e) 0-15% by weight of alkoxylated bis(hydroxyphenyl)-alkanes of molecular weight 300-2000 having less than 10% by weight of oxyethylene segments $-CH_2-CH_2-O-$ and/or

f) 0-15% by weight of polyesters of isomeric phthalic acids of molecular weight 200-2000 having at least two terminal and/or lateral hydroxyl groups and/or

g) 0-15% by weight of diols of molecular weight 300-2000 having perfluoroalkyl groups containing at least three perfluorinated carbon atoms and

h) 0-20% by weight of polyhydroxyl compounds of molecular weight 62-300 and/or

i) 2-20% by weight of polyamines and/or hydrazine and/or hydrazine derivatives of molecular weight 32-300, the total of the percentages of build-up components c) to g) being 3-20% and the total of components a) to i) being 100% by weight,

B) 0-20% by weight of polyurethaneureas analogous to A) of a)-c), h) and i) without d)-g),

C) 5-40% by weight of alcohols and/or ketones each having 4-6 carbon atoms and/or mixtures of these alcohols with aromatic hydrocarbon D), preferably having at least 7 carbon atoms,

D) 5-40% by weight of aromatic and/or aliphatic hydrocarbons having 6-11 carbon atoms and/or fatty acid esters having 3-7 carbon atoms, the mixtures of alcohols C) and aromatic hydrocarbons D) having at least 7 carbon atoms being preferred,

E) 0-5% by weight of crosslinking agents, hydrophobizing agents and/or further coating auxiliary agents,

F) 20-60% by weight of water,

the total of components A) to F) being 100% by weight.

9. Process for preparing the coating pastes conforming to the composition according to Claims 1 to 8, characterized in that the multi-phase coating pastes are prepared by mixing solutions of polyurethanes or polyurethaneureas A) and optionally B) in the organic solvents C), optionally with additions of the organic nonsolvents D) and of the coating auxiliary agents E) and subsequently mixing with water F).

10. Pigmented or unpigmented coating pastes which contain polyurethane plastics, characterized in that the coating pastes are multi-phase mixtures of components A) to F) conforming to the composition according to Claims 1 to 8.

**Revendications**

1. Utilisation de pâtes pour revêtements, éventuellement pigmentées, contenant des matières plastiques du type polyuréthanne pour préparer des revêtements d'enduction perméables à la vapeur d'eau, sur des substrats en textile ou en cuir, par un procédé d'application directe ou par transfert selon le principe de la coagulation avec évaporation, procédé caractérisé en ce que les pâtes pour revêtement sont des mélanges en plusieurs phases consistant en, ou comprenant:

A) 5 à 50% en poids de polyuréthannes et/ou de polyuréthanne-urées, hydrophobes en soi, qui contiennent, incorporés comme autres composants de synthèse, 0,01 à 0,5% en poids de groupes transformables en des sels, qui sont transformés, partiellement ou entièrement, en des sels, et 1 à 30% en poids de résines de silicone comportant des groupes terminaux pouvant réagir avec NCO et/ou des hydroxypolyéthers aromatiques et/ou des hydroxypolyesters aromatiques et/ou des perfluorocarbures comportant des groupes terminaux pouvant réagir avec NCO,

B) 0 à 30% en poids de polyuréthannes et/ou de polyuréthanne-urées, hydrophobes en soi, qui contiennent 0,01 à 0,5% en poids de groupes incorporés, transformables en des sels, et qui sont produits dans les composants spéciaux de synthèse cités en A),

C) 5 à 50% en poids de solvants organiques capables de dissoudre A) et B),

D) 0 à 40% en poids de non-solvants organiques à l'égard de A) et de B),

E) 0 à 5% en poids d'agents de reticulation, d'agents capables de conférer un caractère hydrophobe et/ou d'autres adjuvants pour revêtement,

F) 10 à 70% en poids d'eau,

la somme des composants A) à F) représentant 100% en poids.

2. Utilisation selon la revendication 1, caractérisée en ce que les pâtes pour revêtements sont des mélanges en plusieurs phases consistant en, ou comprenant:

A) 5 à 50% en poids de polyuréthannes et/ou de polyuréthanne-urées, hydrophobes en soi, qui contiennent, comme autres composants de synthèse incorporés, 0,01 à 0,5% en poids de groupes acide carboxylique et/ou acide sulfonique, qui sont transformés, entièrement ou partiellement, par des bases en des sels, et 1 à 30% en poids de résines de silicones comportant des groupes terminaux pouvant réagir avec NCO, des résines d'hydroxypolyéthers aromatiques, des résines d'hydroxypolyesters aromatiques et/ou des résines de polyfluorocarbures comportant des groupes terminaux pouvant réagir avec NCO,

B) 0 à 30% en poids de polyuréthannes et/ou de polyuréthanne-urées, hydrophobes en soi, qui contiennent, incorporés, 0,01 à 0,5% en poids de groupes acide carboxylique et/ou acide sulfonique, qui sont transformés, entièrement ou partiellement avec des bases en des sels, et ont été préparés sans les composants de synthèse spéciaux cités en A),

C) 5 à 50% en poids de solvants organiques capables de dissoudre A) et B),

D) 0 à 40% en poids de non-solvants organiques à l'égard de A) et de B),

E) 0 à 5% en poids d'agents de reticulation, d'agents conférant un caractère hydrophobe et/ou d'autres adjuvants pour revêtements et additifs,

F) 10 à 70% en poids d'eau,

la somme des composants A) à F) représentant 100% en poids.

3. Utilisation selon la revendication 1, caractérisée en ce que les pâtes pour revêtement sont des mélanges en plusieurs phases consistant en, ou comprenant:

A) 5 à 50% en poids de polyuréthannes et/ou de polyuréthanne-urées, hydrophobes en soi, qui contiennent, incorporés comme autres composants de synthèse, 0,01 à 0,5% en poids d'atomes d'azote tertiaires, qui sont transformés, partiellement ou entièrement, avec des acides ou avec des agents de quaternisation, en des sels, et 1 à 30% en poids de résines de silicone comportant des groupes terminaux pouvant réagir avec NCO, d'hydroxypolyéthers aromatiques, d'hydropolyesters aromatiques et/ou des résines de perfluorocarbures comportant des groupes terminaux pouvant réagir avec NCO,

B) 0 à 30% en poids de polyuréthannes et/ou de polyuréthanne-urées, hydrophobes en soi, qui comportent, incorporés, 0,01 à 0,5% en poids d'atomes d'azote tertiaires, qui sont transformés, entièrement ou partiellement, à l'aide d'acide ou d'agents de quaternisation, en des sels, et qui ont été préparés sans les composants spéciaux de synthèse cités en A),

C) 5 à 50% en poids de solvants organiques capables de dissoudre A) et B),

D) 0 à 40% en poids de non-solvants organiques à l'égard de A) et de B),

E) 0 à 5% en poids d'agents de reticulation, d'agents conférant un caractère hydrophobe et/ou d'autres agents pour faciliter le revêtement,

F) 10 à 70% en poids d'eau,

la somme des composants A) à F) représentant 100% en poids.

4. Utilisation selon les revendications 1 et 2, caractérisée en ce que les polyuréthannes et/ou les polyuréthanne-urées A) et B) contiennent 0,01 à 0,5% en poids de groupes acide carboxylique et/ou

acide sulfonique, qui sont transformés entièrement ou partiellement, avec des bases, en des sels, les composés comportant des groupes COOH et/ou $SO_3H$ étant incorporés aux polyuréthannes par l'intermédiaire d'au moins deux groupes pouvant réagir avec les isocyanates.

5. Utilisation selon les revendications 1 et 3, caractérisée en ce que les polyuréthannes et/ou les polyuréthanne-urées A) et B) contiennent 0,01 à 0,5% en poids d'atomes d'azote tertiares, qui sont transformés, entièrement ou partiellement, à l'aide d'acides ou d'agents de quaternisation, en des sels, les composés comportant des atomes d'azote tertiaires étant incorporés aux polyuréthannes par l'intermédiaire d'au moins deux groupes pouvant réagir avec les isocyanates.

6. Utilisation selon les revendications 1 à 5, caractérisée en ce que les polyuréthannes et/ou les polyuréthanne-urées A) contiennent, incorporés dans le polyuréthanne comme composants de synthèse, 1 à 30% en poids de composés contenant des segments polysiloxanne comportants au moins deux groupes, terminaux et/ou latéraux, pouvant réagir les isocyanates et/ou d'hydroxypolyéthers préparés par oxyalkylation de composés aromatiques comportant au moins deux groupes hydroxyles phénoliques, ces polyéthers consistant pour au moins 10% en poids en des segments oxyéthylène $-CH_2-CH_2-O-$, et/ou d'hydroxypolyesters des acides benzènedicarboxyliques isomères comportant au moins deux groupes hydroxyles terminaux et/ou latéraux et/ou de composés contenant des groupes perfluoroalkyles et comportant au moins deux groupes terminaux et/ou latéraux capables de réagir avec les isocynates.

7. Utilisation selon des revendications 1 à 6, caractérisée en ce que les solvants organiques C) sont des alcools et/ou des cétones comportant chacun 4 à 6 atomes de carbone, et en ce que les non-solvants organiques D) sont des hydrocarbures aromatiques et/ou aliphatiques comportant 6 à 11 atomes de carbone et/ou des esters d'acides gras comportant 3 à 7 atomes de carbone.

8. Utilisation selon les revendications 1 à 7, caractérisée en ce que les pâtes pour revêtements ou, dans le cas où elles sont pigmentées, leurs liants, sont des mélanges en plusieurs phases consistant en, ou comportant:

A) 5 à 30% en poids de polyuréthanne-urées, hydrophobes en soi, qui sont produites à partir de

a) 10 à 40% en poids de polyisocyanates organiques et

b) 40 à 80% en poids de composés polyhydroxylés aliphatiques dont le poids moléculaire se situe entre 600 et 5000, et

c) une proportion pondérale d'acides carboxyliques et/ou d'acides sulfoniques, qui sont entièrement ou partiellement transformés par des bases en des sels, comportant au moins deux groupes hydroxyles et/ou amino, primaires ou secondaires, et ayant un poids moléculaire compris entre 120 et 399, correspondant à une proportion de 0,01 à 0,5% en poids de groupes acide carboxylique et/ou acide sulfonique, ou

une proportion pondérale d'amines tertiaires, qui sont transformées, entièrement ou partiellement, à l'aide d'acides ou d'agents de quaternisation, en des sels, comportant au moins deux groupes hydroxyles et/ou amine, primaires ou secondaires, et ayant un poids moléculaire de 120 à 399, correspondant à une proportion de 0,01 à 0,5% en poids de groupes transformables en des sels,

d) 0 à 15% en poids d'un dihydroxyméthyldiméthylsiloxanne dont le poids moléculaire se situe entre 300 et 3000, et/ou

e) 0 à 15% en poids de bis-(hydroxyphényl)-alcanes oxyalkylés, ayant un poids moléculaire de 300 à 2000, comportant au moins 10% en poids de segments oxéthylène $-CH_2-CH_2-O-$ et/ou

f) 0 à 15% en poids de polyesters des acides phtaliques isomères, présentant au moins deux groupes hydroxyles terminaux et/ou latéraux, ayant un poids moléculaire de 200 à 2000, et/ou

g) 0 à 15% en poids de diols comportant au moins trois groupes perfluoroalkyles contenant des atomes de carbone perfluorés, ayant un poids moléculaire de 300 à 2000, et

h) 0 à 20% en poids de composés polyhydroxylés ayant un poids moléculaire compris entre 62 et 300, et/ou

i) 2 à 20% en poids de polyamines et/ou d'hydrazine et/ou de dérivés de l'hydrazine ayant un poids moléculaire de 32 à 300,

la somme des pourcentages des composants de synthèse c) à g) représentant 3 à 20% et la somme des composants a) à i) représentant 100% en poids,

B) 0 à 20% en poids de polyuréthanne-urées analogues à A), obtenus à partir de a) à c), h) et i) sans d) à g),

C) 5 à 40% en poids d'alcools et/ou cétones comportant chacun 4 à 6 atomes de carbone et/ou des mélanges de ces alcools avec des hydrocarbures aromatiques D), ayant avantageusement au moins 7 atomes de carbone,

D) 5 à 40% en poids d'hydrocarbures aromatiques et/ou aliphatiques comportant 6 à 11 atomes de carbone et/ou des esters d'acides gras comportant 3 à 7 atomes de carbone, des mélanges d'alcools C) et d'hydrocarbures aromatiques D), comportant au moins 7 atomes de carbone, étant préféré,

E) 0 à 5% en poids d'agents de réticulation, d'agents conférant un caractère hydrophobe et/ou d'autres adjuvants de revêtements

F) 20 à 60% en poids d'eau,

la somme des composants A) à F) représentant 100% en poids.

9. Procédé pour préparer des pâtes pour revêtements dont la composition correspond aux revendications 1 à 8, caractérisé en ce qu'on prépare les pâtes en plusieurs phases pour revêtements en mélangeant des solutions de polyuréthannes ou des polyuréthanne-urées A) et éventuellement B) dans les solvants organiques C), éventuellement en ajoutant les non-solvants organiques D) et les adjuvants de revêtement E) et enfin en mélangeant avec de l'eau F).

10. Pâtes pour revêtements, éventuellement pigmentées, contenant des matières plastiques du type polyuréthannes, caractérisé en ce que les pâtes pour revêtements sont des mélanges en plusieurs phases des composants A) à F) correspondant à la composition selon les revendications 1 à 8.